(19) Europäisches Patentamt
European Patent Office
Office européen des brevets

(11) EP 4 168 472 B1

(12) EUROPEAN PATENT SPECIFICATION

(45) Date of publication and mention of the grant of the patent:
**03.04.2024 Bulletin 2024/14**

(21) Application number: **21730606.7**

(22) Date of filing: **08.06.2021**

(51) International Patent Classification (IPC):
***C08G 73/02*** *(2006.01)* ***C08L 79/02*** *(2006.01)*
***C11D 3/37*** *(2006.01)*

(52) Cooperative Patent Classification (CPC):
**C11D 3/3723; C08G 73/0206; C08G 73/0213; C08L 79/02**

(86) International application number:
**PCT/EP2021/065279**

(87) International publication number:
**WO 2021/254828 (23.12.2021 Gazette 2021/51)**

(54) **AMPHIPHILIC ALKOXYLATED POLYETHYLENE/-PROPYLENE IMINE COPOLYMERS FOR MULTI-BENEFIT DETERGENT FORMULATIONS**

AMPHIPHILE ALKOXYLIERTE POLYETHYLEN-/PROPYLEN-IMIN-COPOLYMERE FÜR MEHRZWECK-WASCHMITTELFORMULIERUNGEN

COPOLYMÈRES AMPHIPHILES ALKOXYLÉS DE POLYÉTHYLÈNE/PROPYLÈNE IMINE POUR FORMULATIONS DÉTERGENTES MULTI-BÉNÉFICES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.06.2020 EP 20180553**

(43) Date of publication of application:
**26.04.2023 Bulletin 2023/17**

(73) Proprietor: **BASF SE**
**67056 Ludwigshafen am Rhein (DE)**

(72) Inventors:
- **TUERK, Holger**
**67056 Ludwigshafen Am Rhein (DE)**
- **ENGERT, Susanne Carina**
**67056 Ludwigshafen Am Rhein (DE)**
- **HAYDL, Alexander Michael**
**68199 Mannheim (DE)**
- **RISTO, Eugen**
**67056 Ludwigshafen Am Rhein (DE)**

(74) Representative: **BASF IP Association**
**BASF SE**
**GBI-C006**
**67056 Ludwigshafen (DE)**

(56) References cited:
**EP-A2- 2 961 819** **EP-B1- 2 291 501**
**WO-A2-2006/108856**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 168 472 B1

## Description

This invention deals with amphiphilic alkoxylated polyethylene/-propylene imine copolymers, their manufacture and uses, particularly for preparation of multi-benefit detergent formulations, and specifically for improved oily/fatty soil removal in laundry care and improved degreasing properties in manual dishwashing.

In the following, polypropylene imine is also abbreviated "PPI", polyethylene imine is also abbreviated "PEI".

Furthermore, in the following, ethylene oxide is sometimes referred to as "EO" and propylene oxide is sometimes referred to as "PO". Polyethylene oxide is referred to as "PEO" and polypropylene oxide is referred to as "PPO".

Detergent formulators are continuously faced with the task of developing improved products to remove a broad spectrum of soils and stains from fabrics and hard surfaces. Chemically and physico-chemically, the varieties of soils and stains range the spectrum from polar soils, such as proteinaceous, clay, and inorganic soils, to non-polar soils, such as soot, carbon-black, byproducts of incomplete hydrocarbon combustion, and organic soils like sebum. The removal of greasy (i.e. oily/fatty) stains has been a particularly challenging problem. This challenge has been accentuated by the recent high interest and motivation to reduce the level of surfactants in cleaning detergents for environmental, sustainability and cost reasons. The reduction of level of surfactants, especially oil-derived surfactants, such as linear alkyl benzene sulfonate, LAS, has typically been found to lead to an erosion of oily/fatty stain removal. Additionally, the global trend of using washing conditions at lower temperature further diminishes grease cleaning capabilities of typical detergents, since the class of oily and fatty stains shows the greatest performance drop when the temperature is decreased.

Another global trend is the compaction of laundry and manual dish wash detergents, in order to improve the sustainability in terms of water usage and transportation costs, as well as to improve the convenience for the end consumer (e.g. single mono dose products), which leads to a high market demand for new raw materials that have a higher weight-efficiency and a significantly broader performance profile.

As a result of these trends, there is a strong need for new cleaning polymers that provide both excellent primary (i.e. soil removal) and secondary (i.e. whiteness maintenance) cleaning benefits for both hydrophobic and hydrophilic stains. The materials should exhibit good soil removal for oily/fatty and particulate stains and should also lead to improved whiteness maintenance, minimizing the amount of suspended and emulsified oily/fatty and particulate soil from redepositing on the surfaces of the textiles or hard surfaces. Preferably, the new ingredients would also display a synergy with other cleaning polymers known for improving solely the oily/fatty or particulate stain removal and/or whiteness of fabrics and hard surfaces, leading to further improved detergent compositions.

Alkoxylated polyalkylene imine polymers, especially the class of alkoxylated branched PEI and alkoxylated linear PPI homo- and copolymers, are known in the literature to be able to contribute to particulate or to oily/fatty soil removal, especially at low lower surfactant levels and at cold water conditions (30 °C and lower). However, their performance is not sufficient, both from a perspective of oily/fatty soil removal capability and also from a perspective of a broader performance profile. In addition, the known PPI homo- and copolymers of the present art are difficult to synthesize and to further process in an industrial scale. Hence, there was a need to find improved polymer architectures with a superior performance profile and a feasible preparation process.

In the following, a summary of publications in the field of the present invention is given.

Ethoxylated PEI are well known as additives for laundry detergents (e.g. EP3301154, EP3167034, EP112593 and WO2020/030469) or hard surface cleaners (EP2961819). Benefits on both primary cleaning performance and secondary cleaning performance (i.e. whiteness maintenance) have been mentioned, but any specific impact on greasy (i.e. oily/fatty) soil removal has not been disclosed.

Moreover, some reports on ethoxylated and propoxylated PEI exist, describing the effect on the viscosity of formulations. US20180216037 and US20190024026 both describe polyethyleneimines reacted with a rather small amount of EO and PO (e.g. PEI-$(EO)_{10}(PO)_5$) as viscosity modifier for formulations containing anionic surfactants. The PEI alkoxylate is used to reduce the viscosity of the surfactant formulation. In contrast, benefits on oily/fatty soil removal have not been disclosed.

WO2006108856A2 in general describes amphiphilic water-soluble alkoxylated polyalkylene imines with inner PEO block and outer PPO block, for improved oily/fatty stain removal in detergents. In focus of the patent are polymers based on branched polyethylene imine core materials, modified with PEO-block-PPO chains on every NH-functional group, having 6 to 18 EO units and 3 to 12 PO units per polyalkoxylate chain. In any case, the described structures contain several branching units in the polyamine backbone (z>=2), thus linear PPI are not comprised. In addition, the described polymers neither comprise an alkyl-substituted nitrogen atom within the polyamine core. The materials might be additionally quaternized.

WO2006108857A1 describes laundry compositions based on the amphiphilic water-soluble alkoxylated polyalkylene imines, specifically the alkoxylated PEI from patent WO2006108856A2, and the use of the polymers in order to improve grease removal in laundry. A positive contribution on particulate stain removal and/or any secondary cleaning performance/whiteness maintenance benefit is not mentioned at all.

EP2209837B1 describes amphiphilic water-soluble alkoxylated polyalkylene imines, for improved oily/fatty stain removal in detergents. In general, various polyalkylene imines may be used as core materials which are based on different radicals A1 interconnecting the nitrogen atoms. The radicals A1 might be identical or different, linear or branched C2-C6-alkylene radicals, such as 1,2-alkylenes. Preferably, 1,2-ethylene, 1,2-propylene and 1,6-hexamethylene are being used. Usage of 1 ,3-propylene is not mentioned at all. According to formula (I) to (IV), simple alkyl substitution on the nitrogen atoms without continuation of branching within the polyamine core is neither described. Thus, in focus of the patent are linear oligoamines such as 1 ,6-hexamethylene diamine and oligoethylene imines, as well as branched PEI, as disclosed in the examples. The polymers contain PEO/PPO block modification with 24 to 50 EO units and 10 to 50 PO units, thus the alkoxylate chains are longer than those described in WO2006108856A2. Due to the longer PEO/PPO chains, their performance in terms of oily/fatty soil removal is improved.

EP2291501 B1 describes cleaning compositions containing amphiphilic water-soluble alkoxylated polyalkylene imines having an inner PEO block and an outer PPO block. The patent describes the use of the amphiphilic water-soluble alkoxylated polyalkylene imines from patent EP2209837B1, in order to improve grease removal, especially in laundry detergents. Although it is mentioned in the description that the polymers should contribute also to primary cleaning performance for hydrophilic soil and to improved whiteness maintenance, no examples are disclosed that support the described performance profile.

Alkoxylated PPI polymers are also known as additives for detergents, especially for use in laundry detergents. EP2961819B1 describes alkoxylated linear polypropylene imine homo- and copolymers with at least 50% of propylene imine repeating units. The use of oligoamine building blocks containing at least one additional secondary amino group or more than two primary amino groups as starting materials for the polyamine synthesis, e.g. N,N'-Bis-(3-aminopropyl)-ethylene diamine (N4-Amine) or oligomers based on 1 ,3-propylene diamine, are not mentioned at all. Compounds with two primary amino groups and one tertiary amino group, such as N,N-Bis-(3-aminopropyl)-methylamine (BAPMA), are mentioned, but are being considered as diamines. 1 ,2-Ethylene diamine (EDA) is mentioned as potential co-monomer, which may theoretically lead to polyethylene/-propylene imine copolymers if employed in combination with 1 ,3-propylene diamine in the transamination reaction, however, no example of a successful synthesis is being given in the experimental part. The alkoxylated PPI polymers according to this patent application contain at least 6 nitrogen atoms and the polyamine backbone has a numberaverage molecular weight $M_n$ of at least 300 g/mol. However, a simplified manufacturing process for the polyamine backbone, with polymer melting points at room temperature (25 °C +/- 2) or below, to avoid clogging of the reaction tubes and pipes further downstream within the process, is not described and commented at all in this patent application.

EP2961821B1 discloses laundry compositions based on the alkoxylated polypropylene imines from EP2961819B1 and use of the those alkoxylated polypropylene imines for laundry care. A broad variety of alkoxylated polymers has been disclosed. Polymers GC.4 and GC.5 are both based on a PPI homopolymer backbone and are amphiphilically-modified by PEO/PPO chains (block structure: PEO inner block, PPO outer block). Both polymers GC.4 and GC.5 exhibit primary cleaning performance on a single oily/fatty stain (GC.4: dirty motor oil; GC.5 pigment/sebum), however, the detected performance is still not sufficient. A benefit for the secondary cleaning performance (i.e. whiteness maintenance), using a mixed stain set based on oil and clay, is only reported for the solely ethoxylated PPI homopolymer (GC.3) - however, in this case, a benefit for any primary cleaning performance (i.e. oily/fatty soil removal) is not disclosed. Thus, a 2in1 solution describing polymers with a superior benefit for both primary and secondary cleaning performance is not mentioned at all.

EP2961822B1 discloses cleaning compositions for dishwashing, based on the alkoxylated polypropylene imines from EP2961819B1, and use of those alkoxylated polypropylene imines for dishwashing, to avoid glass corrosion of the dishes. The patent application has a strong focus on automatic dishwashing formulations, containing at least one chelating agent in combination with the alkoxylated polypropylene imines. Any specific benefit in terms of degreasing and any specific use of the polymers in manual dishwashing is not mentioned.

In principle, the synthesis of PPI homo- and copolymers is already known in literature as well.

DE2540871A1 and DE2605212A1 describe the transition metal-catalyzed synthesis of linear PPI oligomers and PPI polymers, starting from C3-spacing diamines such as 1,3-propylene diamine (1,3-PDA), at elevated temperatures under reductive conditions with up to full conversion of the diamine. Suitable catalysts for the polytransamination of 1,3-PDA are heterogeneous catalysts which comprise one or more transition metals selected from the group consisting of Fe, Co, Ni, Ru, Rh, Pd, Os, Ir, and Pt, preferably selected from the group consisting of Co, Ni, Ru, Cu, and Pd, more preferably selected from the group consisting of Co, Ni, and Cu. The grade of polymerization herein may be specifically controlled by choosing appropriate hydrogen pressure (20 to 200 bar) and appropriate reaction temperature. To obtain polymers with higher molecular weight, the polytransamination is carried out within a temperature range of 140 °C to 200 °C. Reaction temperatures below 140 °C lead only to oligomeric products, such as dipropylene triamine and tripropylene tetramine, amongside unreacted starting material (1,3-PDA), whereas elevated temperatures (>140 °C, preferably >180 °C) lead to high or full conversion, to yield polymers of high molecular weight as waxy solids with higher melting points, which are not feasible to be employed to a process in a straightforward manner.

WO2014131649A1 describes the process for preparation of predominantly linear polypropylene imine homo- and copolymers (with a catalyst prepared according to EP636409A) based on 1,3-PDA and $M_w$ >203 g/mol with more than 5 repeating units (i.e. at least 6 nitrogen atoms) and optionally a low boiler content of <5 wt%. Besides other diamines, also oligomeric alkylene imines according to formula (II) and polyether amines can be used as co-monomers in combination with 1,3-PDA. However, the use of N,N'-Bis-(3-aminopropyl)-ethylene diamine (N4-Amine) is not comprised in formula (II) and not either further mentioned in the text. In the process according to the invention, the polycondensation is preferably conducted at 130 °C to 180 °C and 75 to 200 bar hydrogen pressure. The catalyst used for this process comprises one or more oxides of the elements Cu, Co and/or Ni. The inventive step is the elucidated temperature dependency of the polytransamination reaction and the technical fit to a continuous process concept to remove low boilers and ammonia from the crude polypropylene imine reaction mixture. However, a simplified manufacturing process for the polyamine backbone, with polymer melting points at room temperature (25 °C +/- 2) or below, to avoid clogging of the reaction tubes and the piping of the asset, is not described and/or mentioned in this publication. Also, any further modification of the PPI homo- and copolymers, e.g. alkoxylation, and/or use in detergents is not mentioned.

WO2017009220 describes the preparation of linear and branched oligo- and polypropylene imine homo- and copolymers for application as hardener in epoxy resins by reaction with epoxy agents, to improve mechanical properties and early water resistance. The PPI is preferably based on the monomer N,N-Bis-(3-aminopropyl)-methylamine (BAPMA), and optionally, other co-monomers (e.g. diamines) can be used for the transamination reaction. However, the use of N,N'-Bis-(3-aminopropyl)-ethylene diamine (N4-Amine) as co-monomer is not mentioned at all.

US9000217B2 describes the preparation of linear and branched oligo- and polypropylene imine homo- and copolymers, using at least one C3-spacing diamine and optionally a second component that might be based on a C2-spacing unit, to obtain a high molecular weight polyamine-containing mixture. The C3-spacing diamine is employed in an amount of at least 95 mol%. The optional second component contains at least one nitrile functional group, according to formula (II). The poly transamination reaction is preferably performed with a Ni/Re catalyst under hydrogen pressure and may also be performed including the second component containing a nitrile functional group, which is in situ reduced to a diamine and then further reacted. It is also mentioned (comparative example) that the usage of special C2-spacers such as 1,2-propylene diamine (1,2-PDA) (which has been already mentioned in DE2540871A1) leads to cyclization (formation of piperazine moieties) and polymers with higher molecular weight cannot be obtained. C2-spacer containing diamines such as N,N'-Bis-(3-aminopropyl)-ethylene diamine (N4-Amine), which specifically contains approx. 25 mol% of C2-spacing units (besides C3-spacing units), are not described herein. Furthermore, a simplified manufacturing process for the polyamine backbone, with polymer melting points at room temperature (25 °C +/- 2) or below, to avoid clogging of the reaction tubes and pipes further downstream within the process, is not described at all within this publication. Also, any further modification of the PPI homo- and copolymers, e.g. alkoxylation, and/or use in detergents, is not mentioned at all.

EP2638020B1 describes the preparation of cyclic and acyclic oligoamine mixtures containing homopiperazine and/or homopiperazine moieties, using either a triamine containing one C2-spacing unit and one C3-spacing unit (e.g. N-(2-aminoethyl)-1,3-propylene diamine (N3-Amine)), or a mixture of two diamines, one of them containing a C3-spacing unit such as 1,3-PDA and the other one containing a C2-spacing unit such as 1,2-ethylene diamine (EDA) or 1,2-PDA. The use of N,N'-Bis-(3-aminopropyl)-ethylene diamine (N4-Amine) as co-monomer is not mentioned. The inventors clearly describe that by using diamines containing single- or non-end-capped C2-spacing units like N3-Amine or EDA, only low molecular weight oligomers are being formed, and that such a co-monomer mixture will not lead to any formation of polymeric polyethylene/- propylene imine copolymers. Depending on the reaction conditions, thereof predominantly on the ratio of EDA/PDA and on the reaction temperature, different product distributions between N-(2-aminoethyl)-1,3-propylene diamine (N3-Amine), Dipropylene triamine (DPTA), N-(3-aminopropyl)-diethylene triamine (TETA), N-(3-aminopropyl)-triethylene tetramine (TEPA), piperazine, homopiperazine and unreacted 1,3-PDA may be obtained. More specifically, the inventors only detected the formation of oligomers with limited amounts of repeating units (mostly up to a maximum of 4 repeating units, i.e. at most 5 nitrogen atoms per oligomer) and additionally significant amounts of homopiperazine and/or unreacted starting materials, at any temperature range and with various co-monomer ratios of EDA and 1,3-PDA.

Although there have been already many different alkoxylated polyalkylene imines described in the cited publications above, including their preparation process and their use in detergents, there is still a need for polymers that have a higher weight-efficiency, i.e. that exhibit further improved benefits on oily/fatty stain removal in laundry and/or improved degreasing benefits in manual dishwashing, in combination with a significantly broader performance profile (2in1 solution), enabling the design of highly concentrated multi-benefit detergent formulations. More specifically, there is still a strong need for new cleaning polymers that provide both excellent primary (i.e. soil removal) and secondary (i.e. whiteness maintenance) cleaning benefits, ideally for both hydrophobic and hydrophilic stains. Furthermore, a simplified manufacturing process for the polyamine backbone, with polymer melting points at room temperature (25 °C +/- 2) or below, to avoid clogging of the reaction tubes and the piping, is needed to enable a safe and feasible transamination

process in an industrial scale.

Now, the inventors have surprisingly found that certain amphiphilic alkoxylated polyethylene/- propylene imine copolymers, as defined below in the appended claims and the description, show superior performance in detergent compositions, e. g. laundry care or manual dishwashing, especially for removal of oily and/or fatty stains and improved whiteness, and can be manufactured by a technically and economically feasible process.

In particular, surprisingly, it has been found that polyethylene/-propylene imine copolymers, synthesized by using a simple, novel process based on a modified ethylene diamine (co-monomer (double substituted secondary diamine with a C2-spacer), that were subsequently modified via alkoxylation, to yield amphiphilic polyethylene oxide/polypropylene oxide block structures, exhibit superior oily/fatty cleaning properties compared to known structures based on polypropylene imine homopolymers. In contrast to similar amphiphilic alkoxylated polyethylene imines (i.e. having identical ethylene oxide/propylene oxide block structures), the inventive polymers also show superior cleaning properties and improved whiteness for hydrophilic/particulate soil like e.g. clay, even better than state-of-the-art polymers like solely ethoxylated polyethylene imines.

Furthermore, it has been surprisingly found that the manufacturing process for the inventive polyethylene/-propylene imine copolymers, synthesized by using a simple, novel process based on a modified ethylene diamine (co-)monomer (double substituted secondary diamine with a C2-spacer), is much more feasible compared to the synthesis of conventional polypropylene imine homopolymers, since the melting points of the novel polymers are significantly lower (i.e. room temperature or even below), so that clogging of the reaction tubes can be avoided and a simple and safe transamination process can be conducted.

Thus, one subject of the present invention are:
Amphiphilic alkoxylated polyethylene/-propylene imine copolymers, comprising in condensed form repeating units of monomer (A), optionally monomer (B), and/or optionally monomer (C), wherein

monomer (A) is represented by the formula

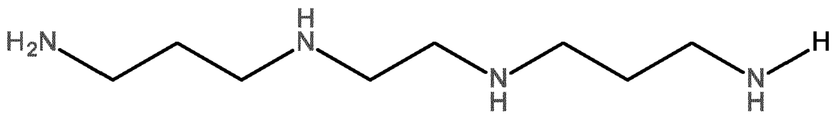

,

monomer (B) is represented by the formula

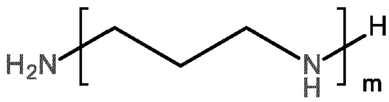

and monomer (C) is represented by the formula

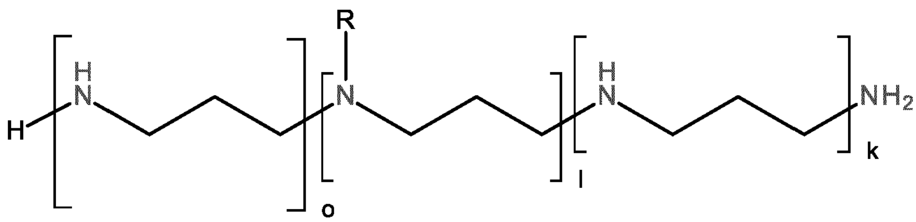

wherein m is in the range from 1 to 4, l is in the range from 1 to 3, k is 0 or 1, o is 0 or 1, and R is a C1 to C18 alkyl moiety,

and wherein each NH-functional group has been directly linked by a covalent bond to an alkoxy chain (A) of the composition $-(A^1O)_a-(A^2O)_b-(A^3O)_c-R'$,

wherein $A^1$ is C3-C12 alkylene, a is from 0 to 2, $A^2$ is ethylene, b is from 5 to 50, $A^3$ is 1,2-propylene, c is from 5 to 50, R' is selected from H or C1-C4 alkyl, and wherein the alkyleneoxy units are preferably attached as block structures.

Further subjects of the present invention include:
Polyethylene/-propylene imine copolymers before alkoxylation, comprising in condensed form repeating units of monomer (A) and monomer (B) and monomer (C), as defined above.

A process for manufacturing inventive amphiphilic alkoxylated polyethylene/-propylene imine copolymers as described above, wherein (I)

a monomer (A)

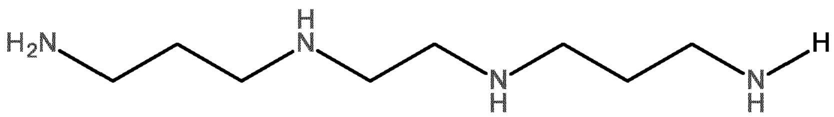

,

and optionally a monomer (B)

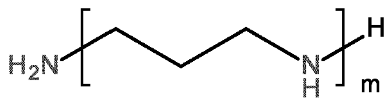

and/or optionally a monomer (C)

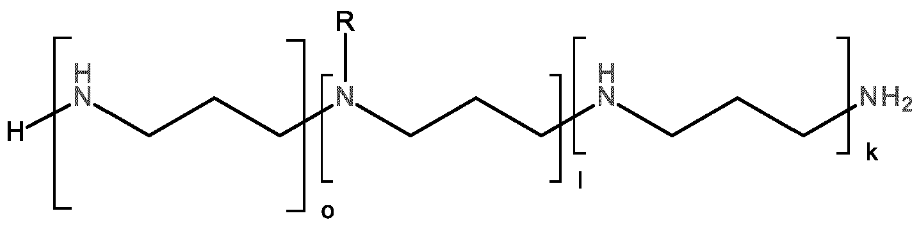

wherein k, l, m, o and R are as defined in any one of claims 1 to 7, is catalytically reacted with hydrogen, optionally purified, then (II) reacted with ethylene oxide, followed by reaction with propylene oxide.

Amphiphilic alkoxylated polyethylene/-propylene imine copolymers, obtainable by the above inventive process.

A detergent composition, particularly a laundry detergent composition or a manual dish wash detergent composition, comprising (i) at least one amphiphilic alkoxylated polyethylene/- propylene imine copolymer as defined above, and (ii) at least one surfactant.

Use of amphiphilic alkoxylated polyethylene/-propylene imine copolymers as defined above for laundry care or manual dishwashing.

Use of amphiphilic alkoxylated polyethylene/-propylene imine copolymers as defined above as additive for detergent formulations, in particular for liquid detergent formulations, preferably concentrated liquid detergent formulations, or single mono doses for laundry.

Some embodiments of the present invention are detailed below in this specification and in the appended claims.

Embodiments of the inventive amphiphilic alkoxylated polyethylene/-propylene imine copolymers comprise in condensed form repeating units of monomer (A) and either monomer (B) or monomer (C), preferably monomer (A) and monomer (B). A preferred embodiment of the inventive amphiphilic alkoxylated polyethylene/-propylene imine copolymers comprises in condensed form repeating units of monomer (A) and monomer (B) and monomer (C).

In an embodiment of the inventive alkoxylated polyethylene/-propylene imine copolymers, m is 1, 2 or 3, preferably 1, and/or l is 1, and/or k is 1, and/or o is 1, and/or R is a C1 to C4 alkyl moiety, preferably methyl, and/or R' is hydrogen.

In an embodiment of the inventive amphiphilic alkoxylated polyethylene/-propylene imine copolymers, the molecular weight $M_w$ of the polyethylene/-propylene imine backbone without alkoxy chains is at least 300 g/mol, more preferably at least 400 g/mol, even more preferably at least 500 g/mol. In another embodiment of the inventive amphiphilic alkoxylated polyethylene/- propylene imine copolymers, the molecular weight $M_w$ of the polyethylene/-propylene imine backbone without alkoxy chains is at least 600 g/mol.

The molecular weight $M_w$ of the backbone is determined by gel permeation chromatography (GPC). For example, the molecular weight of the polyamine starting materials may be measured by GPC, using a column combination of three following columns: HFIP-LG Guard, PL HFIPGEL and PL HFIPGel. Further details are set out below in the experimental section.

The molecular weight of the inventive amphiphilic alkoxylated polyethylene/-propylene imine copolymers may be obtained by theoretical calculations, using the determined weight-average molecular weights of the polyethylene/-propylene imine backbones without alkoxy chains and assuming complete conversion during the alkoxylation step (II). Further details of the calculations are set out below in the experimental section.

In a further embodiment of the inventive amphiphilic alkoxylated polyethylene/-propylene imine copolymers, a is 0, and/or b is 10 to 40, preferably 15 to 35, and/or c is 5 to 40, preferably 10 to 35, and/or the molar ratio EO/PO >0.8, preferably >=1.

In a further embodiment of the inventive amphiphilic alkoxylated polyethylene/-propylene imine copolymers, m is 1, k is 1, o is 1, l is 1, R is methyl, R' is hydrogen, and the amount of monomer (A), monomer (B) and monomer (C) in the polyethylene/-propylene imine backbone without alkoxy chains is each at least 10 wt% and at most 50 wt%.

Process for manufacturing inventive compounds

A further aspect of the present invention is also a process for making inventive amphiphilic alkoxylated polyethylene/-propylene imine copolymers, said process comprising the steps of

(I) polytransamination of monomer (A), optionally monomer (B), and/or optionally monomer (C), wherein

monomer (A) is represented by the formula

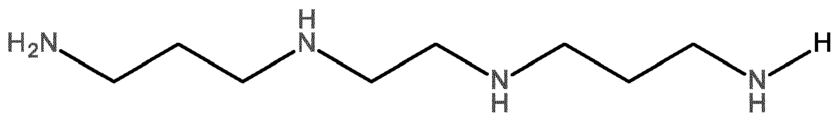

,

monomer (B) is represented by the formula

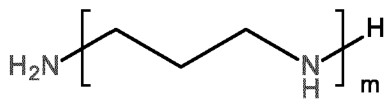

and monomer (C) is represented by the formula

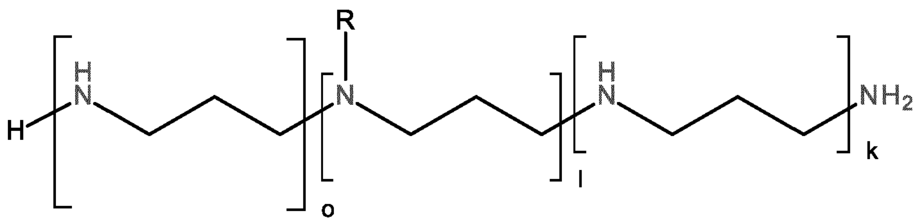

wherein k, l, m, o and R are as defined in any one of claims 1 to 7,

to obtain polyethylene/-propylene imine copolymers, and step

(II) alkoxylation of polyethylene/-propylene imine copolymers, to attach alkoxy chains (A) of the composition

$$-(A^1O)_a-(A^2O)_b-(A^3O)_c-R',$$

wherein $A^1$ is C3-C12 alkylene, a is from 0 to 2, $A^2$ is ethylene, b is from 5 to 50, $A^3$ is 1,2-propylene, c is from 5 to 50, R' is selected from H or C1-C4 alkyl, and wherein the alkyleneoxy units are preferably attached as block structures, to any of the available NH-functional groups of the polyamine backbone.

In a preferred embodiment of the inventive process, the transamination step (I) is performed by using a catalyst based on cobalt and/or manganese and/or wherein the catalyst is a fixed bed catalyst.

In a preferred embodiment of the inventive process described above, the polyethylene/- propylene imine copolymers contain each of the monomers (A), (B) and (C) with an amount of at least 10 wt% and at most 50 wt%.

In a further preferred embodiment of the inventive process described above, the alkoxylation is performed to obtain block structures of PEO as inner block and PPO as outer block, and a further inner block (AO) is not incorporated at all (a = 0).

Further aspects of the present invention are also polyethylene/-propylene imine copolymers before alkoxylation, comprising in condensed form repeating units of monomer (A) and monomer (B) and monomer (C), and amphiphilic alkoxylated polyethylene/-propylene imine copolymers wherein each NH-functional group has been directly linked by a covalent bond to an alkoxy chain (A) of the composition $-(A^1O)_a-(A^2O)_b-(A^3O)_c-R'$, wherein A' is C3-C12 alkylene, a is from 0 to 2, $A^2$ is ethylene, b is from 5 to 50, $A^3$ is 1,2-propylene, c is from 5 to 50, R' is selected from H or C1-C4 alkyl, and wherein the alkyleneoxy units are preferably attached as block structures, obtainable by the inventive process described above (and described below in more detail).

<u>Step (I): Polytransamination</u>

The polyethylene/-propylene imine copolymers of the invention may be prepared by catalytic polytransamination comprising in condensed form repeating units of monomer (A), optionally monomer (B) and/or optionally monomer (C), wherein

monomer (A) is represented by the formula

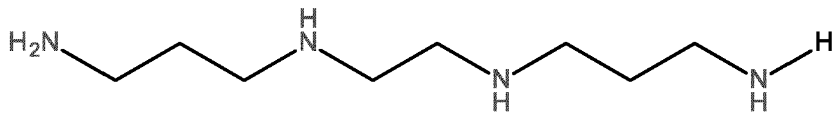

monomer (B) is represented by the formula

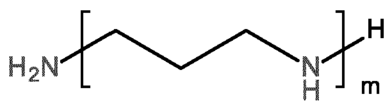

and monomer (C) is represented by the formula

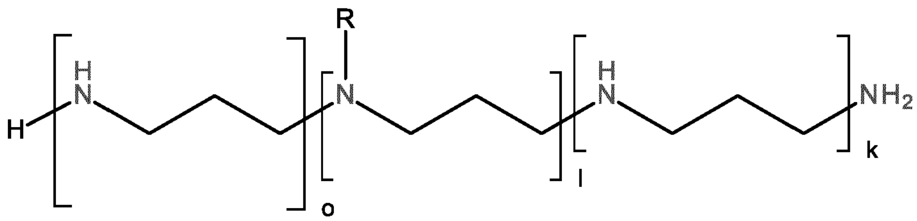

wherein k, l, m, o and R are as defined in any one of claims 1 to 7.

Monomer (A) is represented by the monomer N,N'-Bis-(3-aminopropyl)-ethylene diamine (N4-Amine), which can be used as a pure feedstock or as a crude mixture originating from the addition of approx. two equivalents acrylonitrile to 1,3-propylene diamine (1,3-PDA) followed by a subsequent reduction. Predominantly the purity of N4-Amine is >80 wt%, preferably >90 wt% and most preferably >97 wt%.

An important characteristic of monomer (A) is the double substituted secondary diamine with a C2-spacer, avoiding cyclization to piperazine moieties in form of six- and seven-membered rings (e.g. piperazine or homopiperazine) during the typical transamination reaction conditions, and thus enabling the formation of higher molecular weight polymers.

Examples for monomer (B) are 1,3-PDA (m = 1), and oligomers thereof such as $N^1$-(3-aminopropyl)-propane-1,3-diamine (m = 2), $N^1,N^{1'}$-(propane-1,3-diyl)bis(propane-1,3-diamine) (m = 3) and $N^1$-(3-aminopropyl)-$N^3$-(3-((3-aminopropyl)amino)propyl)-propane-1,3-diamine (m =4), or mixtures thereof. Most preferred monomer (B) is 1,3-PDA. Examples for monomer (C) are $N^1$-methylpropane-1,3-diamine (o = 0, l = 1, k = 0, R = $CH_3$), $N^1$-(3-aminopropyl)-$N^1$-methylpropane-1,3-diamine (o = 1, l = 1, k = 0, R = $CH_3$), $N^1$-(3-aminopropyl)-$N^3$-methylpropane-1,3-diamine (o = 0, l = 1, k = 1, R = $CH_3$), N,N-bis(3-aminopropyl)-methylamine (o = 1, l = 1, k = 1, R = $CH_3$) and the monomers with a variation of o = 0-1, l = 1-3 and k = 0-1, or mixtures thereof. The R-group of monomer (C) is a C1-C18 alkyl moiety, more preferably C1-C4, most preferably methyl. Most preferred monomer (C) is N,N-bis(3-aminopropyl)-methylamine (BAPMA).

More preferably the polyethylene/-propylene imine copolymers of the invention are prepared by catalytic polytransamination of N,N'-Bis-(3-aminopropyl)-ethylene diamine), with a diamine with two NH2-groups, such as, but not limited to, 1,3-PDA and a monomer containing one tertiary amino group, such as, but not limited to N,N-bis(3-aminopropyl)-methylamine.

Regarding the process design, the monomers (A), optionally (B) and/or optionally (C) can be used as a premixed solution and pumped into the reactor as such, or the monomers (A), optionally (B) and/or optionally (C) are pumped independently and mixed together shortly before the reactor.

Suitable catalysts for the polytransamination of N4-Amine and optionally one or more further di-/oligoamines selected from monomers (B) and/or (C) are particularly heterogeneous catalysts which comprise one or more transition metals selected from the group consisting of Fe, Co, Ni, Ru, Rh, Pd, Os, Ir, and Pt, preferably selected from the group consisting of Co, Ni, Ru, Cu, and Pd, more preferably selected from the group consisting of Co, Ni, and Cu.

The polytransamination of N4-Amine optionally together with one or more further di-/oligoamines may be carried out in the presence of hydrogen, as for example under a hydrogen partial pressure of 1 to 400 bar, preferably of 1 to 200 bar, and more particularly of 1 to 100 bar.

The polytransamination of N4-Amine optionally together with one or more further di-/oligoamines may be carried out at a temperature in a range from 50 to 200 °C, preferably in a range from 90 to 180 °C, more particularly in a range from 130 to 170 °C.

The polyethylene/-propylene imine copolymers of the invention preferably have melting points at or around room temperature (rt, i. e. 25 °C +/- 2) or below. A major benefit of this physical behavior is that clogging of the reaction tubes and pipes further downstream within this process could be avoided. The melting points of the inventive copolymers are in the range of -10 °C to 40 °C, preferably -10 °C to 30 °C, more preferably in the range of -10 °C to 27 °C, and most preferably in the range of -5 °C to 25 °C.

In a preferred embodiment of the invention, the polyethylene/-propylene imine copolymers have a melting point in the range of -5 °C to 5 °C.

The polyethylene/-propylene imine copolymers of the invention can be purified via distillation or used as a raw material without any further purification steps. The polyethylene/-propylene imine copolymers of the invention can be optionally diluted with water or other solvents for further processing and application.

In principle, the polyethylene/-propylene imine copolymers of the invention may be linear or branched, with the branching forming a tertiary amino group. Branches may be alkylene amino groups as such (e.g., $-(CH_2)_3-NH_2$ groups), or else longer branches composed of a plurality of alkylene diamine structural elements, which themselves in turn may be branched (e.g.,$-(CH_2)-N-(CH_2-CH_2-CH_2-NH_2)_2$ groups). The degree of branching (DB) may be determined, for example, by means of $^{13}$C-NMR or $^{1}$N-NMR spectroscopy. In accordance with the Frechet approximation, the degree of branching is determined as follows:

$$DB_F = (D+L)/(D+T+L)$$

where D ("dendritic") corresponds to the fraction of tertiary amino groups, L ("linear") corresponds to the fraction of secondary amino groups, and T ("terminal") corresponds to the fraction of primary amino groups. This approximation, however, does not include the focal group of the branched polymer, and is also valid only for high degrees of polymerization. An appropriate description of the ratios in the oligomer range as well is possible using the Frey definition of the DB. According to this definition:

$$DB_{HF} = 2D/(2D+L)$$

In the context of the present invention, alkyl groups originating from the optionally employed monomer (C) are not considered to represent branching. The polyethylene/-propylene imine copolymers of the invention have few or no branches and are therefore substantially linear and have preferably a $DB_{HF}$ of <0.3, more particularly of <0.1, very preferably of <0.05.

In a preferred embodiment of the invention, the polyethylene/-propylene imine copolymers are completely linear ($DB_{HF}$ = 0).

The polyethylene/-propylene imine copolymers of the invention preferably have an amine number for primary amines in the range from 10 to 1000 mg KOH/g, preferably from 80 to 800 mg KOH/g, more preferably from 100 to 500 mg KOH/g. The amine number for primary amines is determined in accordance with the standard DIN EN ISO 9702.

The polyethylene/-propylene imine copolymers of the invention preferably have an amine number for secondary amines in the range from 100 to 2000 mg KOH/g, preferably from 200 to 1500 mg KOH/g, more preferably from 300 to 1000 mg KOH/g. The amine number for secondary amines is determined in accordance with the standard DIN EN ISO

9702.

The polyethylene/-propylene imine copolymers of the invention preferably have an amine number for tertiary amines in the range from 0 to 200 mg KOH/g, preferably from 2 to 100 mg KOH/g, more preferably from 5 to 50 mg KOH/g. The amine number for tertiary amines is determined in accordance with the standard DIN EN ISO 9702.

The polyethylene/-propylene imine copolymers of the invention preferably have an amine number for primary amines in the range from 10 to 1000 mg KOH/g, preferably from 80 to 800 mg KOH/g, more preferably from 100 to 500 mg KOH/g, and an amine number for secondary amines in the range from 100 to 2000 mg KOH/g, preferably from 200 to 1500 mg KOH/g, more preferably from 300 to 1000 mg KOH/g, and an amine number for tertiary amines in the range from 0 to 200 mg KOH/g, preferably from 2 to 100 mg KOH/g, more preferably from 5 to 50 mg KOH/g. The amine number for primary, secondary, and tertiary amines is determined in accordance with the standard DIN EN ISO 9702.

The polyethylene/-propylene imine copolymers of the invention contain at least 6 nitrogen atoms, preferably at least 8 nitrogen atoms, more preferably at least 10 nitrogen atoms. In a preferred embodiment of the invention, the polyethylene/-propylene imine copolymers contain up to 50 nitrogen atoms.

The polyethylene/-propylene imine copolymers of the invention preferably have a weight-average molecular weight $M_w$ in a range from 300 to 5000 g/mol, more preferably in a range from 400 to 4000 g/mol, and most preferably in a range from 500 to 2300 g/mol, determined by gel permeation chromatography (GPC). For example, the molecular weight of the polyamine starting materials may be measured by GPC, using a column combination of three following columns: HFIP-LG Guard, PL HFIPGEL and PL HFIPGel. Further details are set out below in the experimental section. In another embodiment of the invention, the molecular weight $M_w$ of the polyethylene/-propylene imine copolymers is at least 600 g/mol.

The polyethylene/-propylene imine copolymers of the invention preferably have a molar mass distribution $M_w/M_n$ (=polydispersity index (PDI)) in a range from 1.1 to 20, more preferably in a range from 1.1 to 10, more particularly from 1.2 to 5.

The following non-limiting example of manufacturing inventive polyamines illustrates one embodiment of the invention:

In a tubular reactor (for example a tubular reactor with an inner diameter of 10 mm equipped with an inner thermowell of 3.17 mm), N4-Amine is continuously led, optionally together with other amines (preferably selected from 1,3-PDA and BAPMA), together with hydrogen gas (e. g. 15 Nl/h), over a suitable fixed bed catalyst (e. g. catalyst consisting of Co as the active metal). The pressure is between 30 and 100 bar (preferably 40 to 70 bar), the temperature between 150 °C and 200 °C, preferably 160 °C to 180 °C. N4-Amine is fed into the reactor with a dosing rate of approx. 0.3 kg/$L_{cat}$*h. The desired product is directly obtained as a liquid without any purification step in between.

Step (II): Alkoxylation

The hydrogen atoms of the primary and secondary amino groups (i.e. NH-functional groups) of the polyethylene/-propylene imine copolymers backbone are replaced by alkyleneoxy units (A) of the composition

$$-(A^1O)_a-(A^2O)_b-(A^3O)_c-R',$$

wherein $A^1$ is C3-C12 alkylene, a is from 0 to 2, $A^2$ is ethylene, b is from 5 to 50, $A^3$ is 1,2-propylene, c is from 5 to 50, R' is selected from H or C1-C4 alkyl, and wherein the alkyleneoxy units are preferably attached as block structures.

The variables have one of the meanings given below:

$A^1$ in each case is selected from C3-C12 alkylene, preferably 1,2-propylene, 1,2-butylene 1,2-isobutylene and 1,2 dodecene, more preferably 1,2-propylene;
$A^2$ is ethylene;
$A^3$ is 1,2-propylene;
R' in each case is selected from hydrogen and C1-C4-alkyl, such as methyl, ethyl, n-propyl, isopropyl, n-butyl, isobutyl and tert.-butyl; preferably R is hydrogen;
The index a in each case has a value of 0 to 2; preferably a is 0 or approximately 1; more preferably a is 0;
The index b has an average value in the range from 5 to 50, preferably in the range from 10 to 40 and more preferably in the range from 15 to 35;
The index c has an average value in the range from 5 to 50, preferably in the range from 5 to 40 and more preferably in the range from 10 to 35.

The alkyleneoxy units (A) can be conceived as a non-random sequence of alkoxylate blocks, i.e. $-(A^1O)_a-$ is added closest to the NH-functional groups of the polyethylene/-propylene imine copolymer backbone (sub-step (IIa)), the $-(A^2O)_b-$ is added second (sub-step (!!b)) and the - $(A^3O)_c-$ is added third (sub-step (IIc)). This orientation provides

the alkoxylated polyethylene/- propylene imine copolymer with an inner polyethylene oxide (PEO) block, and an outer polypropylene oxide (PPO) block, and thus, with an amphiphilic structure.

The substantial part of these alkyleneoxy units (A) is formed by the ethyleneoxy units $-(CH_2-CH_2-O)_b-$ and the propyleneoxy units $-(CH_2-CH(CH_3)-O)_c-$.

The alkyleneoxy units may additionally also have a small proportion of alkyleneoxy units $-(A^1O)_a-$present, i.e. the NH-functional groups of the of the polyethylene/-propylene imine copolymer backbone may be reacted initially in sub-step (IIa) with small amounts of up to 2 mol, especially from 0.5 to 1.5 mol, in particular from 0.8 to 1.2 mol, of C3 to C12 alkylene oxide, preferably 1,2-propylene oxide, 1,2-butylene oxide, 1,2-isobutylene oxide and 1,2 dodecene oxide, more preferably 1,2-propylene oxide, i.e. the NH-functional groups of the polyethylene/-propylene imine copolymer backbone may be incipiently alkoxylated. This initial modification of the polyalkylene imine backbone allows, if necessary, the viscosity of the reaction mixture in the alkoxylation to be lowered. However, this modification generally does not influence the performance properties of the amphiphilic alkoxylated polyethylene/-propylene imine copolymers and therefore does not constitute a preferred measure.

In a preferred embodiment of the present invention, the amphiphilic alkoxylated polyethylene/- propylene imine copolymers contain alkyleneoxy units (A) wherein the molar ratio EO/PO is >0.8, preferably >=1, without consideration of the optionally included small proportion of alkyleneoxy units $-(A^1O)_a-$.

The amphiphilic alkoxylated polyethylene/-propylene imine copolymers according to the present invention may also be further modified, e.g. quaternized. A suitable degree of quaternization is up to 50%, in particular from 5 to 40%. The quaternization is preferably carried out by introducing C1-C4-alkyl groups and may be undertaken in a customary manner by reaction with corresponding alkyl halides and dialkyl sulfates. The quaternization may be advantageous in order to adjust the amphiphilic alkoxylated polyethylene/-propylene imine copolymers to the particular composition of the laundry detergent or cleaning composition in which they are to be used, and to achieve better compatibility and/or phase stability of the formulation. The amphiphilic alkoxylated polyethylene/-propylene imine copolymers are preferably not further modified, i.e. not further quaternized.

The inventive amphiphilic alkoxylated polyethylene/-propylene imine copolymers may be prepared in a known manner.

In a preferred embodiment of step (II) of the inventive manufacturing process, alkoxyla-tion is performed in three sub-steps.

One preferred procedure consists in initially undertaking only an incipient alkoxylation of the polyethylene/-propylene imine copolymer in a first sub-step (either (IIa1) or (IIb1)).

In case a small proportion of alkyleneoxy units $-(A^1O)_a-$ are incorporated in the amphiphilic alkoxylated polyethylene/-propylene imine copolymers of the present invention, sub-step (IIa1) is carried out: In this first sub-step of the alkoxylation, the polyalkyleneimine is reacted initially only with up to 1 mol of a C3 to C12 alkylene oxide, preferably 1,2-propylene oxide, 1,2-butylene oxide, 1,2-isobutylene oxide and 1,2 dodecene oxide, more preferably 1,2-propylene oxide, per mole of NH-functional groups,

In case that alkyleneoxy units $-(A^1O)a-$ are not incorporated in the amphiphilic alkoxylated polyethylene/-propylene imine copolymers of the present invention, sub-step (IIa1) is skipped and sub-step (IIb1) is carried out instead: In this first sub-step of the alkoxylation, the polyalkyleneimine is reacted initially only with a portion of the total amount of ethylene oxide used, which corresponds to max. 1 mol of ethylene oxide per mole of NH-functional groups.

According to a preferred embodiment of the invention, the alkylene oxide is added in the first sub-step (either (IIa1) or (IIb1)) of process step (II) in an amount of 0.2 to 1.0 alkylene oxide units per NH-functional groups of the polyethylene/-propylene imine copolymer, preferably 0.5 to 0.99, more preferably 0.6 to 0.95 alkylene oxide units per NH-functional groups of the polyethylene/-propylene imine copolymer, even more preferably 0.70 to 0.95 alkylene oxide units per NH-functional groups of the polyethylene/-propylene imine copolymer (incipient alkoxylation or under-hydroxyalkylation).

In a preferred embodiment of the inventive process, the minimum amount of alkylene oxide units per NH-functional groups added in the first sub-step (either (IIa1) or (IIb1)) of process step (II) is at least identical to the amount of basic catalyst added later in the second sub-step (either sub-step (IIa2/IIb), or (IIb2)) or higher, in order to prevent formation of polyalkylene glycol via direct reaction of the basic catalyst with alkylene oxide during the first sub-step.

This reaction is undertaken generally in the absence of a catalyst in an aqueous solution. In one embodiment of the present invention, the reaction during the first sub-step ((IIa1) or (IIb1)) of step (II) of the inventive process may be carried out at a total pressure of up to 15 bar, preferably up to 10 bar, for example 1 to 6 bar. Preferred vessels for carrying out the reaction are autoclaves and tubular reactors.

In an embodiment, the temperature during the first sub-step ((IIa1) or (IIb1)) of step (II) of the inventive process is in the range of 90 °C to 160 °C, preferably 100 °C to 150 °C, more preferably 110 °C to 140 °C.

In a second sub-step, the further alkoxylation is then performed by subsequent reaction with the remaining amount of the higher alkylene oxide (sub-step (IIa2)), followed by the entirety of ethylene oxide (sub-step (IIb)), or by the remaining amount of ethylene oxide (sub-step (IIb2)).

In the third sub-step (IIc), propylene oxide is then added to obtain the outer hydrophobic block.

In an embodiment, the temperature during the second ((IIa2), (IIb) or (IIb2)) and third (IIc) sub-step of step (II) of the inventive process is in the range of 100 °C to 180 °C, preferably 120 °C to 160 °C, more preferably 120 °C to 145 °C.

Higher temperatures than specified above during the alkoxylation steps are also possible, but are not preferred, since they usually lead to (more) colored products and/or more pronounced side reactions.

In one embodiment of the present invention, the reaction during the second ((IIa2), (IIb) or (IIb2)) and third (IIc) sub-step of step (II) of the inventive process may be carried out at a total pressure of up to 15 bar, preferably up to 10 bar, for example 2 to 10 bar. Preferred vessels for carrying out the reaction are autoclaves and tubular reactors.

In a preferred embodiment of the invention, the different monomers in the three sub-steps are added only after complete (>99 wt%) conversion and post-reaction time in the previous step, to obtain block structures. In one embodiment of the present invention, the different monomers in the three sub-steps are added already before complete (>99 wt%) conversion in the previous step, e.g. addition of the second monomer without post-reaction time after addition of the first monomer, to obtain gradient structures.

The further alkoxylation steps (sub-steps (IIa2), (IIb) or (IIb2), and (IIc)) are undertaken typically in the presence of a basic catalyst. Suitable basic catalysts are such as LiOH, NaOH, KOH, CsOH and mixtures thereof, sodium or potassium alkoxides such as potassium methylate ($KOCH_3$), potassium tert-butoxide, sodium methylate ($NaOCH_3$), sodium n-hexanolate and sodium ethoxide. Further examples of basic catalysts are alkali metal hydrides and alkaline earth metal hydrides such as sodium hydride and calcium hydride, and alkali metal carbonates such as sodium carbonate and potassium carbonate. Preference is given to the alkali metal hydroxides, preference being given to potassium hydroxide and sodium hydroxide, and to alkali metal alkoxides, preference being given to potassium methylate ($KOCH_3$) and sodium methylate ($NaOCH_3$). Particular preference is given to potassium hydroxide and to potassium methylate ($KOCH_3$). Typical use amounts for the base, for example KOH, are from 0.02 wt% to 10 wt%, in particular from 0.05 wt% to 1 wt%, relative to the amphiphilic alkoxylated polyethylene/- propylene imine copolymer.

In a preferred embodiment of the inventive process, the basic catalyst is only used in the second and third sub-step of the alkoxylation step (II) and is selected from the group consisting of alkaline earth metal containing basic catalysts.

A specifically preferred embodiment of a basic catalyst in the inventive process is KOH; KOH may be used in the inventive process as a solution in water.

In an embodiment of the inventive process, the basic catalyst is added in an amount of 0.05 wt% to 0.3 wt%, preferably 0.15 wt% to 0.25 wt%, relative to the amphiphilic alkoxylated polyethylene/-propylene imine copolymer.

In a preferred embodiment of the present invention, the basic catalyst is added to the reaction mixture only after the first sub-step. In one embodiment of the present invention, the basic catalyst is added to the reaction mixture after the first sub-step and additionally also after the second sub-step (i.e. before the addition of 1,2-propylene oxide). In addition, the reaction during the second ((IIa2), (IIb) or (IIb2)) and third (IIc) sub-step of step (II) of the inventive process can be interrupted at different intermediates (i.e. alkoxylation degrees) and can be continued with or without additional catalyst addition.

The further alkoxylation (second and third sub-step of step (II) of the inventive process) may be undertaken in substance (variant (i)) or in an organic solvent (variant (ii)).

In variant (i), the aqueous solution of the incipiently alkoxylated polyethylene/-propylene imine copolymer obtained in the first sub-step, after addition of the basic catalyst, is initially dewatered. This can be done in a simple manner by heating to from 80 to 150°C and distilling off the water under a reduced pressure, e.g. from 0.01 to 0.5 bar. The subsequent reaction with the alkylene oxide is then carried out in substance w/o any additional solvent.

In variant (ii), an organic solvent and a basic catalyst are added to the aqueous solution of the incipiently alkoxylated polyethylene/-propylene imine copolymer obtained in the first sub-step. The mixture is initially dewatered, which is advantageously done by separating out the water at a temperature of 120 to 180°C, preferably supported by a gentle nitrogen stream and optionally vacuum. Alternatively, the solvent can be added to the incipiently alkoxylated polyethylene/- propylene imine copolymer obtained in the first sub-step after addition of the base and dewatering. Suitable organic solvents for variant (ii) are in particular nonpolar and polar aprotic organic solvents. Examples of particularly suitable nonpolar aprotic solvents include aliphatic and aromatic hydrocarbons such as hexane, cyclohexane, toluene and xylene. Examples of particularly suitable polar aprotic solvents are ethers, in particular cyclic ethers such as tetrahydrofuran and dioxane, N,N-dialkylamides such as dimethylformamide and dimethylacetamide, and N-alkyllactams such as N-methylpyrrolidone. It is of course also possible to use mixtures of these organic solvents. Preferred organic solvents are xylene and toluene. The subsequent reaction with the alkylene oxide may then be carried out as in variant (i).

In variant (i), the amphiphilic alkoxylated polyethylene/-propylene imine copolymer is obtained directly in substance and may be converted, if desired, to an aqueous solution. In variant (ii), the organic solvent is typically removed and replaced by water. The products may, of course, also be isolated in substance.

In a preferred embodiment of the present invention, the amphiphilic alkoxylated polyethylene/- propylene imine copolymer is isolated in substance.

In one embodiment of the present invention, the final product is mixed with 1 to 80 wt% water, more preferably

1 to 60 wt% water, even more preferably 5 to 50 wt% water and most preferably 10 to 40 wt% water, in order to lower the viscosity and to improve the handling. Furthermore, antimicrobial agents may be added to improve the preservation of the aqueous solution of the final product.

The final product obtained after the third sub-step of step (II) of the inventive process, i.e. the amphiphilic alkoxylated polyethylene/-propylene imine copolymer, may be treated with a bleaching agent. The bleaching agent is preferably selected from the group consisting of borates, hypochlorites, boro-hydrates and hydrogen peroxide.

An optional step of work-up may also include the adjustment of the pH of the final product, especially if the product is obtained as aqueous solution. Any suitable acid may be used to neutralize the basic catalyst used for the second and third sub-step of step (II) of the inventive process. Furthermore, any suitable acid or base might be used to adjust the final pH. Preferably, acetic acid, citric acid, sulfuric acid, hydrochloric acid or methanesulfonic acid are being used as acid; Sodium hydroxide, potassium hydroxide or amines are being used as base. In one embodiment of the present invention, either acetic acid is being used as acid or alkanolamines are being used as base to adjust the pH. In a preferred embodiment of the invention, neither an acid nor a base are being used and the pH of the final product is not adjusted at all, leading to a pH of the final product in water of preferably pH 7 to 14, more preferably to pH 8 to 13 and even more preferably to pH 9 to 12.

The amphiphilic alkoxylated polyethylene/-propylene imine copolymers according to the present invention exhibit superior properties as a soil detachment-promoting additive for laundry detergents and other cleaning compositions such as manual dish wash detergents. They show high dissolving power especially in the case of oily/fatty soil, but also for particulate soil. Their outstanding properties lead to improved primary cleaning performance (i.e. soil removal) especially for oily/fatty soils, but at the same time also to improved secondary cleaning performance such as improved whiteness (especially for particulate soils). It is of particular advantage that they display the soil-detaching power even at low washing temperatures (i.e. 30 °C or lower).

The amphiphilic alkoxylated polyethylene/-propylene imine copolymers according to the present invention can be added to the laundry detergents and cleaning compositions in amounts of generally from 0.05 to 15 wt%, preferably from 0.1 to 10 wt% and more preferably from 0.25 to 5 wt%, based on the particular overall composition, including other components and water and/or solvents.

The following non-limiting example of manufacturing inventive amphiphilic alkoxylated polyethylene/-propylene imine copolymers illustrates one embodiment of the invention:
The polymer (polyamine from step (I)), optionally after purification, and optionally water is charged into a pressure reactor (e. g. steel pressure reactor). The reactor is purged, e. g. with nitrogen, to remove air and an inert gas pressure of 0.5 to 5 bar (preferably 1 to 3 bar) is set. The reactor is heated to a temperature of 80 °C to 150 °C (preferably 90 °C to 120 °C) and ethylene oxide is dosed into the reactor for several hours. After that, the reaction mixture is kept at the same temperature for post reaction. Volatile compounds are removed under vacuum and the product is removed from the reactor.

The previously obtained product is filled into a pressure reactor (e. g. steel pressure reactor) and potassium hydroxide (preferably in solution, e. g. 50 wt% aqueous solution) is added. Water is removed under reduced pressure, for example at 100 °C to 130 °C. The reactor is purged with inert gas to remove air and a nitrogen pressure of 0.5 to 5 bar (preferably 1 to 3 bar) is set. The reactor is heated to a temperature between 120 °C and 160 °C, preferably 120 °C to 145 °C, and ethylene oxide is dosed into the reactor within several hours. The mixture is allowed to post react for another several hours. Volatile compounds are removed under vacuum and the product is obtained.

The previously obtained ethoxylate is filled into a pressure reactor (e. g. steel pressure reactor) and potassium hydroxide (preferably in solution, e. g. 50 wt% aqueous solution) is added. Water is removed under reduced pressure and at elevated temperature, for example at 110 °C. The reactor is purged with inert gas to remove air and an inert gas pressure of 0.5 to 5 bar (preferably around 1 to 3 bar) is set. The reactor is heated to a temperature of 120 °C to 160 °C, preferably 120 °C to 145 °C, and propylene oxide is dosed into the reactor within several hours. The mixture is allowed to post react for another several hours. Volatile compounds are removed under vacuum and the product is obtained as a highly viscous liquid to waxy solid.

The finally obtained polymers according to this invention have a weight-average molecular weight (based on GPC data of polyamines and theoretical calculation of the polymers after alkoxylation, cf. experimental part) of 12000 to 200000 g/mol, preferably 15000 to 150000 g/mol and even more preferred 20000 to 100000 g/mol. In a preferred embodiment of the invention, the amphiphilic alkoxylated polyethylene/-propylene imine copolymers have a weight-average molecular weight of 40000 to 100000 g/mol.

<u>Uses of the present invention</u>

The inventive compounds may be used in detergent formulations (also called detergent compositions).

Thus, one aspect of the present invention is a detergent composition, particularly a laundry detergent composition or manual dish wash detergent composition, comprising (i) at least one inventive amphiphilic alkoxylated polyethylene/-propylene imine copolymer and (ii) at least one surfactant.

In an embodiment of the inventive detergent composition, the composition is liquid or solid, preferably liquid.

In a further embodiment of the inventive detergent composition, the composition contains (i) at least one inventive amphiphilic alkoxylated polyethylene/-propylene imine copolymer, and (ii) at least one anionic surfactant, and (iii) water.

In a further embodiment of the inventive detergent composition, the composition contains (i) at least one inventive amphiphilic alkoxylated polyethylene/-propylene imine copolymer, and (ii) at least one further polymer selected from multifunctional polyethyleneimines or multifunctional diamines, or mixtures thereof.

In a further embodiment of the inventive detergent composition, the composition contains (i) at least one amphiphilic alkoxylated polyethylene/-propylene imine copolymer, and (ii) at least one further 2-propylheptyl ethoxylated non-ionic surfactant having an average degree of ethoxylation of from 3 to 5.

The inventive detergent composition may further comprise 2-phenoxyethanol and/or 4,4'-dichloro-2-hydroxydiphenylether.

The inventive amphiphilic alkoxylated polyethylene/-propylene imine copolymers may be used for laundry care or manual dishwashing.

The inventive amphiphilic alkoxylated polyethylene/-propylene imine copolymers may also be used for oily and/or fatty soil removal and whiteness improvement, preferably in laundry care.

In one embodiment of the present invention, the inventive amphiphilic alkoxylated polyethylene/- propylene imine copolymers may be used for oily and/or fatty soil removal, whiteness improvement and additionally for improvement of bleachable stain removal, preferably in laundry care.

One aspect of the present invention is also the use of the inventive polymers as additives for detergent formulations, particularly for liquid detergent formulations, preferably concentrated liquid detergent formulations, or single mono doses for laundry.

Detergent formulations comprising the inventive compounds

(a) Laundry formulations

Another aspect of the present invention is also a laundry formulation, comprising at least one of the inventive amphiphilic alkoxylated polyethylene/-propylene imine copolymers as described above.

Thus, an aspect of the present invention is also the use of the inventive amphiphilic alkoxylated polyethylene/-propylene imine copolymers, as described above, in laundry applications.

The laundry formulations according to the invention can be liquid, gels, or solid compositions, solid embodiments encompassing, for example, powders and tablets. Liquid compositions are preferred and may be packaged as unit doses.

In one embodiment of the present invention, the amphiphilic alkoxylated polyethylene/-propylene imine copolymers are a component of a laundry formulation (also called laundry care composition in this specification) that additionally comprises at least one surfactant, preferably at least one anionic surfactant.

Examples of suitable anionic surfactants are alkali metal and ammonium salts of $C_8$-$C_{12}$-alkyl sulfates, of $C_{12}$-$C_{18}$-fatty alcohol ether sulfates, of $C_{12}$-$C_{18}$-fatty alcohol polyether sulfates, of sulfuric acid half-esters of ethoxylated $C_4$-$C_{12}$-alkylphenols (ethoxylation: 3 to 50 mol of ethylene oxide/mol), of $C_{12}$-$C_{18}$-alkylsulfonic acids, of $C_{12}$-$C_{18}$ sulfo fatty acid alkyl esters, for example of $C_{12}$-$C_{18}$ sulfo fatty acid methyl esters, of $C_{10}$-$C_{18}$-alkylarylsulfonic acids, preferably of n-$C_{10}$-$C_{18}$-alkylbenzene sulfonic acids, of $C_{10}$-$C_{18}$ alkyl alkoxy carboxylates and of soaps such as for example $C_8$-$C_{24}$-carboxylic acids. Preference is given to the alkali metal salts of the aforementioned compounds, particularly preferably the sodium salts.

In one embodiment of the present invention, anionic surfactants are selected from n-$C_{10}$-$C_{18}$-alkylbenzene sulfonic acids and from fatty alcohol polyether sulfates, which, within the context of the present invention, are in particular sulfuric acid half-esters of ethoxylated $C_{12}$-$C_{18}$-alkanols (ethoxylation: 1 to 50 mol of ethylene oxide/mol), preferably of n-$C_{12}$-$C_{18}$-alkanols.

In one embodiment of the present invention, also alcohol polyether sulfates derived from branched (i.e. synthetic) $C_{11}$-$C_{18}$-alkanols (ethoxylation: 1 to 50 mol of ethylene oxide/mol) may be employed.

Preferably, the alkoxylation group of both types of alkoxylated alkyl sulfates, based on $C_{12}$-$C_{18}$-fatty alcohols or based on branched (i.e. synthetic) $C_{11}$-$C_{18}$-alcohols, is an ethoxylation group and an average ethoxylation degree of any of the alkoxylated alkyl sulfates is 1 to 5, preferably 1 to 3.

Preferably, the laundry detergent formulation of the present invention comprises from at least 1 wt% to 50 wt%, preferably in the range from greater than or equal to about 2 wt% to equal to or less than about 30 wt%, more preferably in the range from greater than or equal to 3 wt% to less than or equal to 25 wt%, and most preferably in the range from greater than or equal to 5 wt% to less than or equal to 25 wt% of one or more anionic surfactants as described above, based on the particular overall composition, including other components and water and/or solvents.

Compositions according to the invention may comprise at least one builder. In the context of the present

invention, no distinction will be made between builders and such components elsewhere called "co-builders". Examples of builders are complexing agents, hereinafter also referred to as complexing agents, ion exchange compounds, and precipitating agents. Builders are selected from citrate, phosphates, silicates, carbonates, phosphonates, amino carboxylates and polycarboxylates.

In the context of the present invention, the term citrate includes the mono- and the dialkali metal salts and in particular the mono- and preferably the trisodium salt of citric acid, ammonium or substituted ammonium salts of citric acid as well as citric acid. Citrate can be used as the anhydrous compound or as the hydrate, for example as sodium citrate dihydrate. Quantities of citrate are calculated referring to anhydrous trisodium citrate.

The term phosphate includes sodium metaphosphate, sodium orthophosphate, sodium hydrogenphosphate, sodium pyrophosphate and polyphosphates such as sodium tripolyphosphate. Preferably, however, the composition according to the invention is free from phosphates and polyphosphates, with hydrogenphosphates being subsumed, for example free from trisodium phosphate, pentasodium tripolyphosphate and hexasodium metaphosphate ("phosphate-free"). In connection with phosphates and polyphosphates, "free from" should be understood within the context of the present invention as meaning that the content of phosphate and polyphosphate is in total in the range from 10 ppm to 0.2% by weight of the respective composition, determined by gravimetry.

The term carbonates includes alkali metal carbonates and alkali metal hydrogen carbonates, preferred are the sodium salts. Particularly preferred is $Na_2CO_3$.

Examples of phosphonates are hydroxyalkanephosphonates and aminoalkanephosphonates. Among the hydroxyalkanephosphonates, the 1-hydroxyethane-1,1-diphosphonate (HEDP) is of particular importance as builder. It is preferably used as sodium salt, the disodium salt being neutral and the tetrasodium salt being alkaline (pH 9). Suitable aminoalkanephosphonates are preferably ethylene diaminetetramethylenephosphonate (EDTMP), diethylenetriaminepenta-methylenephosphonate (DTPMP), and also their higher homologues. They are preferably used in the form of the neutrally reacting sodium salts, e.g. as hexasodium salt of EDTMP or as hepta- and octa-sodium salts of DTPMP.

Examples of amino carboxylates and polycarboxylates are nitrilotriacetates, ethylene diamine tetraacetate, diethylene triamine pentaacetate, triethylene tetraamine hexaacetate, propylene diamines tetraacetic acid, ethanol-diglycines, methylglycine diacetate, and glutamine diacetate. The term amino carboxylates and polycarboxylates also include their respective non-substituted or substituted ammonium salts and the alkali metal salts such as the sodium salts, in particular of the respective fully neutralized compound.

Silicates in the context of the present invention include in particular sodium disilicate and sodium metasilicate, alumosilicates such as for example zeolites and sheet silicates, in particular those of the formula $\alpha$-$Na_2Si_2O_5$, $\beta$-$Na_2Si_2O_8$, and $\delta$-$Na_2Si_2O_5$.

Compositions according to the invention may contain one or more builder selected from materials not being mentioned above. Examples of builders are $\alpha$-hydroxypropionic acid and oxidized starch.

In one embodiment of the present invention, builder is selected from polycarboxylates. The term "polycarboxylates" includes non-polymeric polycarboxylates such as succinic acid, $C_2$-$C_{16}$-alkyl disuccinates, $C_2$-$C_{16}$-alkenyl disuccinates, ethylene diamine N,N'-disuccinic acid, tartaric acid diacetate, alkali metal malonates, tartaric acid monoacetate, propanetricarboxylic acid, butanetetracarboxylic acid and cyclopentanetetracarboxylic acid.

Oligomeric or polymeric polycarboxylates are for example polyaspartic acid or in particular alkali metal salts of (meth)acrylic acid homopolymers or (meth)acrylic acid copolymers.

Suitable co-monomers are monoethylenically unsaturated dicarboxylic acids such as maleic acid, fumaric acid, maleic anhydride, itaconic acid and citraconic acid. A suitable polymer is in particular polyacrylic acid, which preferably has a weight-average molecular weight $M_w$ in the range from 2000 to 40 000 g/mol, preferably 2000 to 10 000 g/mol, in particular 3000 to 8000 g/mol. Further suitable copolymeric polycarboxylates are in particular those of acrylic acid with methacrylic acid and of acrylic acid or methacrylic acid with maleic acid and/or fumaric acid.

It is also possible to use copolymers of at least one monomer from the group consisting of monoethylenically unsaturated $C_3$-$C_{10}$mono- or $C_4$-$C_{10}$-dicarboxylic acids or anhydrides thereof, such as maleic acid, maleic anhydride, acrylic acid, methacrylic acid, fumaric acid, itaconic acid and citraconic acid, with at least one hydrophilically or hydrophobically modified co-monomer as listed below.

Suitable hydrophobic co-monomers are, for example, isobutene, diisobutene, butene, pentene, hexene and styrene, olefins with ten or more carbon atoms or mixtures thereof, such as, for example, 1-decene, 1-dodecene, 1-tetradecene, 1-hexadecene, 1-octadecene, 1-eicosene, 1-docosene, 1-tetracosene and 1-hexacosene, $C_{22}$-$\alpha$-olefin, a mixture of $C_{20}$-$C_{24}$-$\alpha$-olefins and polyisobutene having on average 12 to 100 carbon atoms per molecule.

Suitable hydrophilic co-monomers are monomers with sulfonate or phosphonate groups, and also non-ionic monomers with hydroxyl function or alkylene oxide groups. By way of example, mention may be made of: allyl alcohol, isoprenol, methoxypolyethylene glycol (meth)acrylate, methoxypolypropylene glycol (meth)acrylate, methoxypolybutylene glycol (meth)acrylate, methoxypoly(propylene oxide-co-ethylene oxide) (meth)acrylate, ethoxypolyethylene glycol (meth)acrylate, ethoxypolypropylene glycol (meth)acrylate, ethoxypolybutylene glycol (meth)acrylate and ethoxypoly(propylene oxide-co-ethylene oxide) (meth)acrylate. Polyalkylene glycols here can comprise 3 to 50, in particular 5 to

40 and especially 10 to 30 alkylene oxide units per molecule.

Particularly preferred sulfonic-acid-group-containing monomers here are 1-acrylamido-1-propanesulfonic acid, 2-acrylamido-2-propanesulfonic acid, 2-acrylamido-2-methylpropanesulfonic acid, 2-methacrylamido-2-methylpropanesulfonic acid, 3-methacrylamido-2-hydroxypropanesulfonic acid, allylsulfonic acid, methallylsulfonic acid, allyloxybenzenesulfonic acid, methallyloxybenzenesulfonic acid, 2-hydroxy-3-(2-propenyloxy)propanesulfonic acid, 2-methyl-2-propene-1-sulfonic acid, styrenesulfonic acid, vinylsulfonic acid, 3-sulfopropyl acrylate, 2-sulfoethyl methacrylate, 3-sulfopropyl methacrylate, sulfomethacrylamide, sulfomethylmethacrylamide, and salts of said acids, such as sodium, potassium or ammonium salts thereof.

Particularly preferred phosphonate-group-containing monomers are vinylphosphonic acid and its salts.

Moreover, amphoteric polymers can also be used as builders.

Compositions according to the invention can comprise, for example, in the range from in total 0.1 to 70 % by weight, preferably 10 to 50% by weight, preferably up to 20% by weight, of builder(s), especially in the case of solid formulations. Liquid formulations according to the invention preferably comprise in the range of from 0.1 to 8 % by weight of builder.

Formulations according to the invention can comprise one or more alkali carriers. Alkali carriers ensure, for example, a pH of at least 9 if an alkaline pH is desired. Of suitability are, for example, the alkali metal carbonates, the alkali metal hydrogen carbonates, and alkali metal metasilicates mentioned above, and, additionally, alkali metal hydroxides. A preferred alkali metal is in each case potassium, particular preference being given to sodium. In one embodiment of the present invention, a pH >7 is adjusted by using amines, preferably alkanolamines, more preferably triethanolamine.

In one embodiment of the present invention, the laundry formulation according to the invention comprises additionally at least one enzyme.

Useful enzymes are, for example, one or more lipases, hydrolases, amylases, proteases, cellulases, hemicellulases, phospholipases, esterases, pectinases, lactases and peroxidases, and combinations of at least two of the foregoing types.

Enzyme can be incorporated at levels sufficient to provide an effective amount for cleaning. The preferred amount is in the range from 0.001% to 5 % of active enzyme by weight in the detergent composition according to the invention. Together with enzymes also enzyme stabilizing systems may be used such as for example calcium ions, boric acid, boronic acid, propylene glycol and short chain carboxylic acids. In the context of the present invention, short chain carboxylic acids are selected from monocarboxylic acids with 1 to 3 carbon atoms per molecule and from dicarboxylic acids with 2 to 6 carbon atoms per molecule. Preferred examples are formic acid, acetic acid, propionic acid, oxalic acid, succinic acid, $HOOC(CH_2)_3COOH$, adipic acid and mixtures from at least two of the foregoing, as well as the respective sodium and potassium salts.

In one embodiment of the present invention, the laundry formulations comprise lipases and the inventive polymers are used in combination with lipases to obtain even further improvement of oily/fatty stain removal.

In another embodiment of the present invention, the inventive laundry formulations do not comprise lipases.

Compositions according to the invention may comprise one or more bleaching agent (bleaches).

Preferred bleaches are selected from sodium perborate, anhydrous or, for example, as the monohydrate or as the tetrahydrate or so-called dihydrate, sodium percarbonate, anhydrous or, for example, as the monohydrate, and sodium persulfate, where the term "persulfate" in each case includes the salt of the peracid $H_2SO_5$ and also the peroxodisulfate.

In this connection, the alkali metal salts can in each case also be alkali metal hydrogen carbonate, alkali metal hydrogen perborate and alkali metal hydrogen persulfate. However, the dialkali metal salts are preferred in each case.

Formulations according to the invention can comprise one or more bleach catalysts. Bleach catalysts can be selected from oxaziridinium-based bleach catalysts, bleach-boosting transition metal salts or transition metal complexes such as, for example, manganese-, iron-, cobalt-, ruthenium- or molybdenum-salen complexes or carbonyl complexes. Manganese, iron, cobalt, ruthenium, molybdenum, titanium, vanadium and copper complexes with nitrogen-containing tripod ligands and also cobalt-, iron-, copper- and ruthenium-amine complexes can also be used as bleach catalysts.

Formulations according to the invention can comprise one or more bleach activators, for example tetraacetyl ethylene diamine, tetraacetylmethylene diamine, tetraacetylglycoluril, tetraacetylhexylene diamine, acylated phenolsulfonates such as for example n-nonanoyl- or isononanoyloxybenzene sulfonates, N-methylmorpholinium-acetonitrile salts ("MMA salts"), trimethylammonium acetonitrile salts, N-acylimides such as, for example, N-nonanoylsuccinimide, 1,5-diacetyl-2,2-dioxohexahydro-1,3,5-triazine ("DADHT") or nitrile quats (trimethylammonium acetonitrile salts).

Formulations according to the invention can comprise one or more corrosion inhibitors. In the present case, this is to be understood as including those compounds which inhibit the corrosion of metal. Examples of suitable corrosion inhibitors are triazoles, in particular benzotriazoles, bisbenzotriazoles, aminotriazoles, alkylaminotriazoles, also phenol derivatives such as, for example, hydroquinone, pyrocatechol, hydroxyhydroquinone, gallic acid, phloroglucinol or pyrogallol.

In one embodiment of the present invention, formulations according to the invention comprise in total in the range from 0.1 to 1.5% by weight of corrosion inhibitor.

Formulations according to the invention may also comprise further cleaning polymers and/or soil release polymers.

The additional cleaning polymers may include, without limitation, multifunctional polyethylene imines (for example BASF's Sokalan® HP20) and/or multifunctional diamines (for example BASF's Sokalan® HP96).

Multifunctional polyethylene imines according to the present invention are typically ethoxylated polyethylene imines with a weight-average molecular weight $M_w$ in the range from 3000 to 250000, preferably 5000 to 200000, more preferably 8000 to 100000, more preferably 8000 to 50000, more preferably 10000 to 30000, and most preferably 10000 to 20000 g/mol. The multifunctional polyethylene imines have 80 wt% to 99 wt%, preferably 85 wt% to 99 wt%, more preferably 90 wt% to 98 wt%, most preferably 93 wt% to 97 wt% or 94 wt% to 96 wt% ethylene oxide side chains, based on the total weight of the materials. Ethoxylated polyethylene imines according to the present invention are based on a polyethylene imine core and a polyethylene oxide shell. Suitable polyethylene imine core molecules are polyethylene imines with a weight-average molecular weight $M_w$ in the range of 500 to 5000 g/mol. Preferred is a molecular weight from 500 to 1000 g/mol, even more preferred is a $M_w$ of 600 to 800 g/mol. The ethoxylated polymer then has on average 5 to 50, preferably 10 to 35 and even more preferably 20 to 35 ethylene oxide (EO) units per NH-functional group.

Multifunctional diamines according to the present invention are typically ethoxylated C2 to C12 alkylene diamines, preferably hexamethylene diamine, which are further quaternized and optionally sulfated. The multifunctional diamines have a weight-average molecular weight $M_w$ in the range from 2000 to 10000, more preferably 3000 to 8000, and most preferably 4000 to 6000 g/mol. In a preferred embodiment of the invention, ethoxylated hexamethylene diamine, furthermore quaternized and sulfated, may be employed, which contains on average 10 to 50, preferably 15 to 40 and even more preferably 20 to 30 ethylene oxide (EO) groups per NH-functional group, and which preferably bears two cationic ammonium groups and two anionic sulfate groups.

In a preferred embodiment of the present invention, either multifunctional polyethylene imines or multifunctional diamines according to the descriptions above may be employed to improve the stain removal ability, especially the primary detergency of particulate stains on polyester fabrics of laundry detergents.

In another embodiment of the present invention, mixtures of multifunctional polyethylene imines and multifunctional diamines according to the descriptions above may be employed to improve the stain-removal ability, especially the primary detergency of particulate stains on polyester fabrics of laundry detergents.

The multifunctional polyethylene imines or multifunctional diamines or mixtures thereof according to the descriptions above may be added to the laundry detergents and cleaning compositions in amounts of generally from 0.05 to 15 wt%, preferably from 0.1 to 10 wt% and more preferably from 0.25 to 5 wt%, based on the particular overall composition, including other components and water and/or solvents.

Thus, one aspect of the present invention is a laundry detergent composition, in particular a liquid laundry detergent, comprising (i) at least one inventive amphiphilic alkoxylated polyethylene/-propylene imine copolymer and (ii) at least one polymer selected from multifunctional polyethylene imines or multifunctional diamines or mixtures thereof.

In one embodiment of the present invention, the ratio of the at least one inventive amphiphilic alkoxylated polyethylene/-propylene imine copolymer and (ii) the at least one polymer selected from multifunctional polyethylene imines or multifunctional diamines or mixtures thereof, is from 10:1 to 1:10, preferably from 5:1 to 1:5 and more preferably from 3:1 to 1:3.

Laundry formulations comprising the inventive amphiphilic alkoxylated polyethylene/-propylene imine copolymers may also comprise at least one antimicrobial agent.

The antimicrobial agent may be selected from the list consisting of 2-phenoxyethanol (CAS-no. 122-99-6, for example Protectol® PE available from BASF) and 4,4'-dichloro-2-hydroxydiphenylether (CAS: 3380-30-1), and combinations thereof.

The 4,4'-dichloro-2-hydroxydiphenylether may be used as a solution, for example a solution of 30 wt% of 4,4'-dichloro-2-hydroxydiphenylether in 1,2-propyleneglycol, e. g. Tinosan® HP 100 available from BASF.

The inventive laundry formulation may comprise at least one antimicrobial agent from the above list and/or a combination thereof, and/or a combination with at least one further antimicrobial agent not listed here.

The antimicrobial agent may be added to the inventive laundry formulation in a concentration of 0.0001 wt% to 10 wt% relative to the total weight of the composition.

Preferably, the formulation contains 2-Phenoxyethanol in a concentration of 0.01 wt% to 5 wt%, more preferably 0.1 wt% to 2 wt% and/or 4,4'-dichloro 2-hydroxydiphenyl ether in a concentration of 0.001 wt% to 1 wt%, more preferably 0.002 wt% to 0.6 wt% (in all cases relative to the total weight of the composition).

Formulations according to the invention may comprise at least one additional surfactant, selected from non-ionic and amphoteric surfactants and from zwitterionic surfactants.

Non-ionic and amphoteric surfactants

Examples of (additional) surfactants are in particular non-ionic surfactants. Preferred non-ionic surfactants are alkoxylated alcohols and alkoxylated fatty alcohols, di- and multiblock copolymers of ethylene oxide and propylene oxide and reaction products of sorbitan with ethylene oxide or propylene oxide, furthermore alkylphenol ethoxylates, alkyl glycosides, polyhydroxy fatty acid amides (glucamides). Examples of (additional) amphoteric surfactants are so-called amine oxides.

Preferred examples of alkoxylated alcohols and alkoxylated fatty alcohols are, for example, compounds of the general formula (I)

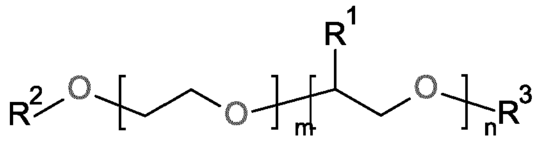

(I)

in which the variables are defined as follows:

- $R^1$ is selected from linear $C_1$-$C_{10}$-alkyl, preferably ethyl and particularly preferably methyl,
- $R^2$ is selected from $C_8$-$C_{22}$-alkyl, for example n-$C_8H_{17}$, n-$C_{10}H_{21}$, n-$C_{12}H_{25}$, n-$C_{14}H_{29}$, n-$C_{16}H_{33}$ or n-$C_{18}H_{37}$,
- $R^3$ is selected from $C_1$-$C_{10}$-alkyl, methyl, ethyl, n-propyl, isopropyl, n-butyl, isobutyl, sec-butyl, tert-butyl, n-pentyl, isopentyl, sec-pentyl, neopentyl, 1,2-dimethylpropyl, isoamyl, n-hexyl, isohexyl, sec-hexyl, n-heptyl, n-octyl, 2-ethylhexyl, n-nonyl, n-decyl or isodecyl,
- m and n are in the range from zero to 300, where the sum of n and m is at least one. Preferably,
- m is in the range from 1 to 100 and n is in the range from 0 to 30.

Here, compounds of the general formula (I) may be block copolymers or random copolymers, preference being given to block copolymers.

Other preferred examples of alkoxylated alcohols and alkoxylated fatty alcohols are, for example, compounds of the general formula (II)

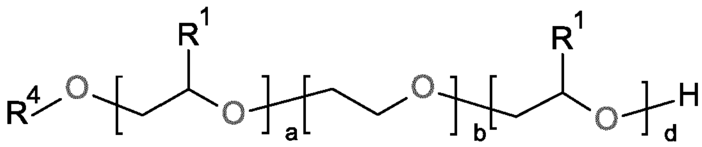

(II)

in which the variables are defined as follows:

- $R^1$ is identical or different and selected from linear $C_1$-$C_4$-alkyl, preferably identical in each case and ethyl and particularly preferably methyl,
- $R^4$ is selected from $C_6$-$C_{20}$-alkyl, in particular n-$C_8H_{17}$, n-$C_{10}H_{21}$, n-$C_{12}H_{25}$, n-$C_{14}H_{29}$, n-$C_{16}H_{33}$, n-$C_{18}H_{37}$,
- a is a number in the range from zero to 6, preferably 1 to 6,
- b is a number in the range from zero to 20, preferably 4 to 20,
- d is a number in the range from 4 to 25.

Preferably, at least one of a and b is greater than zero.

Here, compounds of the general formula (II) may be block copolymers or random copolymers, preference being given to block copolymers.

Further suitable non-ionic surfactants are selected from di- and multiblock copolymers, composed of ethylene oxide and propylene oxide. Further suitable non-ionic surfactants are selected from ethoxylated or propoxylated sorbitan esters. Alkylphenol ethoxylates or alkyl polyglycosides or polyhydroxy fatty acid amides (glucamides) are likewise suitable. An overview of suitable further non-ionic surfactants can be found in EP-A 0 851 023 and in DE-A 198 19 187.
Mixtures of two or more different non-ionic surfactants may also be present.
Suitable amphoteric surfactants are so-called amine oxides, such as lauryl dimethyl amine oxide ("lauramine oxide").

Zwitterionic surfactants

Examples of zwitterionic surfactants are $C_{12}$-$C_{18}$-alkylbetaines and sulfobetaines.
Formulations according to the invention may also comprise water and additional organic solvents, e.g. ethanol or propylene glycol.
Further optional ingredients may be but are not limited to viscosity modifiers, cationic surfactants, foam boosting or foam reducing agents, perfumes, dyes, optical brighteners, and dye transfer inhibiting agents.

(b) Manual dish wash detergents

Another aspect of the present invention is also a manual dish wash detergent formulation, comprising at least one of the inventive amphiphilic alkoxylated polyethylene/-propylene imine copolymers as described above.
Thus, an aspect of the present invention is also the use of the inventive amphiphilic alkoxylated polyethylene/-propylene imine copolymers, as described above, in manual dish wash applications.
Manual dish wash detergents according to the invention can be in the form of a liquid, semiliquid, cream, lotion, gel, or solid composition, solid embodiments encompassing, for example, powders and tablets. Liquid compositions are preferred. The detergents are intended for use in liquid form for direct or indirect application onto dishware.
In one embodiment of the present invention, the amphiphilic alkoxylated polyethylene/-propylene imine copolymers are one component of a manual dish wash formulation that additionally comprises at least one surfactant, preferably at least one anionic surfactant.
Preferably the composition is formulated to provide superior grease cleaning (degreasing) properties, long-lasting suds and improved viscosity control at decreased temperature exposures. Optional further benefits include soil removal, shine, and hand care.
Examples of suitable anionic surfactants are alkali metal and ammonium salts of $C_8$-$C_{12}$-alkyl sulfates, of $C_{12}$-$C_{18}$-fatty alcohol ether sulfates, of $C_{12}$-$C_{18}$-fatty alcohol polyether sulfates, of sulfuric acid half-esters of ethoxylated $C_4$-$C_{12}$-alkylphenols (ethoxylation: 3 to 50 mol of ethylene oxide/mol), of $C_{12}$-$C_{18}$-alkylsulfonic acids, of $C_{12}$-$C_{18}$ sulfo fatty acid alkyl esters, for example of $C_{12}$-$C_{18}$ sulfo fatty acid methyl esters, of $C_{10}$-$C_{18}$-alkylarylsulfonic acids, preferably of n-$C_{10}$-$C_{18}$-alkylbenzene sulfonic acids, of $C_{10}$-$C_{18}$ alkyl alkoxy carboxylates and of soaps such as for example $C_8$-$C_{24}$-carboxylic acids. Preference is given to the alkali metal salts of the aforementioned compounds, particularly preferably the sodium salts.
In one embodiment of the present invention, anionic surfactants are selected from n-$C_{10}$-$C_{18}$-alkylbenzene sulfonic acids and from fatty alcohol polyether sulfates, which, within the context of the present invention, are in particular sulfuric acid half-esters of ethoxylated $C_{12}$-$C_{18}$-alkanols (ethoxylation: 1 to 50 mol of ethylene oxide/mol), preferably of n-$C_{12}$-$C_{18}$-alkanols.
In one embodiment of the present invention, also alcohol polyether sulfates derived from branched (i.e. synthetic) $C_{11}$-$C_{18}$-alkanols (ethoxylation: 1 to 50 mol of ethylene oxide/mol) may be employed.
Preferably, the alkoxylation group of both types of alkoxylated alkyl sulfates, based on $C_{12}$-$C_{18}$-fatty alcohols or based on branched (i.e. synthetic) $C_{11}$-$C_{18}$-alcohols, is an ethoxylation group and an average ethoxylation degree of any of the alkoxylated alkyl sulfates is 1 to 5, preferably 1 to 3.
Preferably, the manual dish wash detergent formulation of the present invention comprises from at least 1 wt% to 50 wt%, preferably in the range from greater than or equal to about 3 wt% to equal to or less than about 35 wt%, more preferably in the range from greater than or equal to 5 wt% to less than or equal to 30 wt%, and most preferably in the range from greater than or equal to 5 wt% to less than or equal to 20 wt% of one or more anionic surfactants as described above, based on the particular overall composition, including other components and water and/or solvents.
Compositions according to the invention may comprise at least one amphoteric surfactant.
Examples of amphoteric surfactants are amine oxides. Preferred amine oxides are alkyl dimethyl amine oxides or alkyl amido propyl dimethyl amine oxides, more preferably alkyl dimethyl amine oxides and especially coco dimethyl amino oxides. Amine oxides may have a linear or mid-branched alkyl moiety. Typical linear amine oxides include water-soluble amine oxides containing one R1 = C8-18 alkyl moiety and two R2 and R3 moieties selected from the group consisting of C1-C3 alkyl groups and C1-C3 hydroxyalkyl groups. Preferably, the amine oxide is characterized by the

formula

R1-N(R2)(R3)-O

wherein R1 is a C8-18 alkyl and R2 and R3 are selected from the group consisting of methyl, ethyl, propyl, isopropyl, 2-hydroxethyl, 2-hydroxypropyl and 3-hydroxypropyl. The linear amine oxide surfactants in particular may include linear C10-C18 alkyl dimethyl amine oxides and linear C8-C12 alkoxy ethyl dihydroxy ethyl amine oxides. Preferred amine oxides include linear C10, linear C10-C12, and linear C12-C14 alkyl dimethyl amine oxides. As used herein "mid-branched" means that the amine oxide has one alkyl moiety having n1 carbon atoms with one alkyl branch on the alkyl moiety having n2 carbon atoms. The alkyl branch is located on the alpha carbon from the nitrogen on the alkyl moiety. This type of branching for the amine oxide is also known in the art as an internal amine oxide. The total sum of n1 and n2 is from 10 to 24 carbon atoms, preferably from 12 to 20, and more preferably from 10 to 16. The number of carbon atoms for the one alkyl moiety (n1) should be approximately the same number of carbon atoms as the one alkyl branch (n2) such that the one alkyl moiety and the one alkyl branch are symmetric. As used herein "symmetric" means that (n1-n2) is less than or equal to 5, preferably 4, most preferably from 0 to 4 carbon atoms in at least 50 wt%, more preferably at least 75 wt% to 100 wt% of the mid-branched amine oxides for use herein. The amine oxide further comprises two moieties, independently selected from a C1-C3 alkyl, a C1-C3 hydroxyalkyl group, or a polyethylene oxide group containing an average of from about 1 to about 3 ethylene oxide groups. Preferably the two moieties are selected from a C1-C3 alkyl, more preferably both are selected as a C1 alkyl.

The manual dish wash detergent composition of the invention preferably comprises from 1 wt% to 15 wt%, preferably from 2 wt% to 12 wt%, more preferably from 3 wt% to 10 wt% of the composition of an amphoteric surfactant, preferably an amine oxide surfactant. Preferably the composition of the invention comprises a mixture of the anionic surfactants and alkyl dimethyl amine oxides in a weight ratio of less than about 10:1, more preferably less than about 8:1, more preferably from about 5:1 to about 2:1.

Addition of the amphoteric surfactant provides good foaming properties in the detergent composition.

Compositions according to the invention may comprise at least one zwitterionic surfactant. Suitable zwitterionic surfactants include betaines, such as alkyl betaines, alkylamidobetaine, amidazoliniumbetaine, sulfobetaine (INCI Sultaines) as well as the phosphobetaines. Examples of suitable betaines and sulfobetaines are the following (designated in accordance with INCI): Almondamidopropyl of betaines, Apricotam idopropyl betaines, Avocadamidopropyl of betaines, Babassuamidopropyl of betaines, Behenam idopropyl betaines, Behenyl of betaines, Canolam idopropyl betaines, Capryl/Capram idopropyl betaines, Carnitine, Cetyl of betaines, Cocamidoethyl of betaines, Cocam idopropyl betaines, Cocam idopropyl Hydroxysultaine, Coco betaines, Coco Hydroxysultaine, Coco/Oleam idopropyl betaines, Coco Sultaine, Decyl of betaines, Dihydroxyethyl Oleyl Glycinate, Dihydroxyethyl Soy Glycinate, Dihydroxyethyl Stearyl Glycinate, Dihydroxyethyl Tallow Glycinate, Dimethicone Propyl of PG-betaines, Erucam idopropyl Hydroxysultaine, Hydrogenated Tallow of betaines, Isostearam idopropyl betaines, Lauram idopropyl betaines, Lauryl of betaines, Lauryl Hydroxysultaine, Lauryl Sultaine, Milkam idopropyl betaines, Minkamidopropyl of betaines, Myristam idopropyl betaines, Myristyl of betaines, Oleam idopropyl betaines, Oleam idopropyl Hydroxysultaine, Oleyl of betaines, Olivamidopropyl of betaines, Palmam idopropyl betaines, Palm itam idopropyl betaines, Palmitoyl Carnitine, Palm Kernelam idopropyl betaines, Polytetrafluoroethylene Acetoxypropyl of betaines, Ricinoleam idopropyl betaines, Sesam idopropyl betaines, Soyam idopropyl betaines, Stearam idopropyl betaines, Stearyl of betaines, Tallowam idopropyl betaines, Tallowam idopropyl Hydroxysultaine, Tallow of betaines, Tallow Dihydroxyethyl of betaines, Undecylenam idopropyl betaines and Wheat Germam idopropyl betaines.

A preferred betaine is, for example, Cocoamidopropylbetaine. The zwitterionic surfactant preferably is a betaine surfactant, more preferable a Cocoamidopropylbetaine surfactant.

The manual dish wash detergent composition of the invention optionally comprises from 1 wt% to 15 wt%, preferably from 2 wt% to 12 wt%, more preferably from 3 wt% to 10 wt% of the composition of a zwitterionic surfactant, preferably a betaine surfactant.

In a preferred embodiment of the present invention, the manual dish wash formulations contain at least one amphoteric surfactant, preferably an amine oxide, or at least one zwitterionic surfactant, preferably a betaine, or mixtures thereof, to aid in the foaming, detergency, and/or mildness of the detergent composition.

Compositions according to the invention may comprise at least one cationic surfactant.

Examples of cationic surfactants are quaternary ammonium surfactants, preferably selected from mono C6-C16, more preferably C6-C10 N-alkyl or alkenyl ammonium surfactants, wherein the remaining N positions are substituted by methyl, hydroxyethyl or hydroxypropyl groups. Another preferred cationic surfactant is a C6-18 alkyl or alkenyl ester of a quaternary ammonium alcohol, such as quaternary chlorine esters.

Cationic surfactants, when present in the composition, are present in an effective amount, more preferably from 0.1 wt% to 5 wt%, preferably 0.2 wt% to 2 wt% of the composition.

Compositions according to the invention may comprise at least one non-ionic surfactant.

Preferred non-ionic surfactants are alkoxylated alcohols and alkoxylated fatty alcohols, di- and multiblock copolymers of ethylene oxide and propylene oxide and reaction products of sorbitan with ethylene oxide or propylene oxide, furthermore alkylphenol ethoxylates, alkyl glycosides and polyhydroxy fatty acid amides (glucamides).
Preferred examples of alkoxylated alcohols and alkoxylated fatty alcohols are, for example, compounds of the general formula (I)

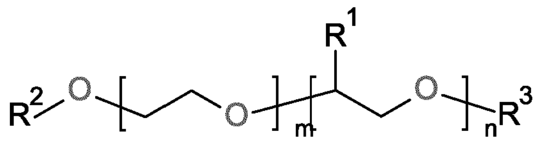

(I)

in which the variables are defined as follows:

$R^1$ is selected from linear $C_1$-$C_{10}$-alkyl, preferably ethyl and particularly preferably methyl,

$R^2$ is selected from $C_8$-$C_{22}$-alkyl, for example n-$C_8H_{17}$, n-$C_{10}H_{21}$, n-$C_{12}H_{25}$, n-$C_{14}H_{29}$, n-$C_{16}H_{33}$ or n-$C_{18}H_{37}$,

$R^3$ is selected from $C_1$-$C_{10}$-alkyl, methyl, ethyl, n-propyl, isopropyl, n-butyl, isobutyl, sec-butyl, tert-butyl, n-pentyl, isopentyl, sec-pentyl, neopentyl, 1,2-dimethylpropyl, isoamyl, n-hexyl, isohexyl, sec-hexyl, n-heptyl, n-octyl, 2-ethylhexyl, n-nonyl, n-decyl or isodecyl,

m and n are in the range from zero to 300, where the sum of n and m is at least one. Preferably,

m is in the range from 1 to 100 and n is in the range from 0 to 30.

Here, compounds of the general formula (I) may be block copolymers or random copolymers, preference being given to block copolymers.
Other preferred examples of alkoxylated alcohols and alkoxylated fatty alcohols are, for example, compounds of the general formula (II)

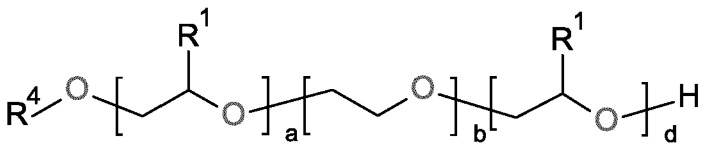

(II)

in which the variables are defined as follows:

$R^1$ is identical or different and selected from linear $C_1$-$C_4$-alkyl, preferably identical in each case and ethyl and particularly preferably methyl,

$R^4$ is selected from $C_6$-$C_{20}$-alkyl, in particular n-$C_8H_{17}$, n-$C_{10}H_{21}$, n-$C_{12}H_{25}$, n-$C_{14}H_{29}$, n-$C_{16}H_{33}$, n-$C_{18}H_{37}$,

a is a number in the range from zero to 6, preferably 1 to 6,

b is a number in the range from zero to 20, preferably 4 to 20,

d is a number in the range from 4 to 25.

Preferably, at least one of a and b is greater than zero.
Here, compounds of the general formula (II) may be block copolymers or random copolymers, preference being given to block copolymers.
Further suitable non-ionic surfactants are selected from di- and multiblock copolymers, composed of ethylene oxide and propylene oxide. Further suitable non-ionic surfactants are selected from ethoxylated or propoxylated sorbitan esters. Alkylphenol ethoxylates or alkyl polyglycosides or polyhydroxy fatty acid amides (glucamides) are likewise suitable. An overview of suitable further non-ionic surfactants can be found in EP-A 0 851 023 and in DE-A 198 19 187.

Mixtures of two or more different non-ionic surfactants may also be present.

Highly preferred non-ionic surfactants are the condensation products of Guerbet alcohols with from 2 to 18 moles, preferably 2 to 15, more preferably 5-12 of ethylene oxide per mole of alcohol. Other preferred non-ionic surfactants for use herein include fatty alcohol polyglycol ethers, alkylpolyglucosides and fatty acid glucamides.

The manual hand dish detergent composition of the present invention may comprise from 0.1 wt% to 10 wt%, preferably from 0.3 wt% to 5 wt%, more preferably from 0.4 wt% to 2 wt% of the composition, of a linear or branched C10 alkoxylated non-ionic surfactant having an average degree of alkoxylation of from 2 to 6, preferably from 3 to 5. Preferably, the linear or branched C10 alkoxylated non-ionic surfactant is a branched C10 ethoxylated non-ionic surfactant having an average degree of ethoxylation of from 2 to 6, preferably of from 3 to 5. Preferably, the composition comprises from 60 wt% to 100 wt%, preferably from 80 wt% to 100 wt%, more preferably 100 wt% of the total linear or branched C10 alkoxylated non-ionic surfactant of the branched C10 ethoxylated non-ionic surfactant. The linear or branched C10 alkoxylated non-ionic surfactant preferably is a 2-propylheptyl ethoxylated non-ionic surfactant having an average degree of ethoxylation of from 3 to 5. A suitable 2-propylheptyl ethoxylated non-ionic surfactant having an average degree of ethoxylation of 4 is Lutensol® XP40, commercially available from BASF SE, Ludwigshafen, Germany. The use of a 2-propylheptyl ethoxylated non-ionic surfactant having an average degree of ethoxylation of from 3 to 5 leads to improved foam levels and long-lasting suds.

Thus, one aspect of the present invention is a manual dish wash detergent composition, in particular a liquid manual dish wash detergent composition, comprising (i) at least one amphiphilic alkoxylated polyethylene/-propylene imine copolymer, and (ii) at least one further 2-propylheptyl ethoxylated non-ionic surfactant having an average degree of ethoxylation of from 3 to 5.

Compositions according to the invention may comprise at least one hydrotrope in an effective amount, to ensure the compatibility of the liquid manual dish wash detergent compositions with water.

Suitable hydrotropes for use herein include anionic hydrotropes, particularly sodium, potassium, and ammonium xylene sulfonate, sodium, potassium and ammonium toluene sulfonate, sodium, potassium, and ammonium cumene sulfonate, and mixtures thereof, and related compounds, as disclosed in U.S. Patent 3,915,903.

The liquid manual dish wash detergent compositions of the present invention typically comprise from 0.1 wt% to 15 wt% of the total liquid detergent composition of a hydrotrope, or mixtures thereof, preferably from 1 wt% to 10 wt%, most preferably from 2 wt% to 5 wt% of the total liquid manual dish wash composition.

Compositions according to the invention may comprise at least one organic solvent.

Examples of organic solvents are C4-C14 ethers and diethers, glycols, alkoxylated glycols, C6-C16 glycol ethers, alkoxylated aromatic alcohols, aromatic alcohols, aliphatic branched alcohols, alkoxylated aliphatic branched alcohols, alkoxylated linear C1-C5 alcohols, linear C1-C5 alcohols, amines, C8-C14 alkyl and cycloalkyl hydrocarbons and halohydrocarbons, and mixtures thereof.

When present, the liquid detergent compositions will contain from 0.01 wt% to 20 wt%, preferably from 0.5 wt% to 15 wt%, more preferably from 1 wt% to 10 wt%, most preferably from 1 wt% to 5 wt% of the liquid detergent composition of a solvent. These solvents may be used in conjunction with an aqueous liquid carrier, such as water, or they may be used without any aqueous liquid carrier being present. At higher solvent systems, the absolute values of the viscosity may drop but there is a local maximum point in the viscosity profile.

The compositions herein may further comprise from 30 wt% to 90 wt% of an aqueous liquid carrier, comprising water, in which the other essential and optional ingredients are dissolved, dispersed or suspended. More preferably the compositions of the present invention comprise from 45 wt% to 85 wt%, even more preferably from 60 wt% to 80 wt% of the aqueous liquid carrier. The aqueous liquid carrier, however, may contain other materials which are liquid, or which dissolve in the liquid carrier, at room temperature (25 °C) and which may also serve some other function besides that of an inert filler.

Compositions according to the invention may comprise at least one electrolyte.

Suitable electrolytes are preferably selected from inorganic salts, even more preferably selected from monovalent salts, most preferably sodium chloride.

The liquid manual dish wash compositions according to the invention may comprise from 0.1 wt% to 5 wt%, preferably from 0.2 wt% to 2 wt% of the composition of an electrolyte.

Manual dish wash formulations comprising the inventive amphiphilic alkoxylated polyethylene/- propylene imine copolymers may also comprise at least one antimicrobial agent.

The antimicrobial agent may be selected from the list consisting of 2-phenoxyethanol (CAS-no. 122-99-6, for example Protectol® PE available from BASF) and 4,4'-dichloro-2-hydroxydiphenylether (CAS: 3380-30-1), and combinations thereof.

The 4,4'-dichloro-2-hydroxydiphenylether may be used as a solution, for example a solution of 30 wt% of 4,4'-dichloro-2-hydroxydiphenylether in 1,2-propyleneglycol, e. g. Tinosan® HP 100 available from BASF.

The inventive hand dish wash formulation may comprise at least one antimicrobial agent from the above list and/or a combination thereof, and/or a combination with at least one further antimicrobial agent not listed here.

The antimicrobial agent may be added to the inventive hand dish wash formulation in a concentration of 0.0001 wt% to 10 wt% relative to the total weight of composition. Preferably, the formulation contains 2-Phenoxyethanol in a concentration of 0.01 wt% to 5 wt%, more preferably 0.1 wt% to 2 wt% and/or 4,4'-dichloro 2-hydroxydiphenyl ether in a concentration of 0.001 wt% to 1 wt%, more preferably 0.002 wt% to 0.6 wt% (in all cases relative to the total weight of the composition).

Compositions according to the invention may comprise at least one additional ingredient. Examples of additional ingredients are such as but not limited to conditioning polymers, cleaning polymers, surface modifying polymers, soil flocculating polymers, rheology modifying polymers, enzymes, structurants, builders, chelating agents, cyclic diamines, structurants, emollients, humectants, skin rejuvenating actives, carboxylic acids, scrubbing particles, bleach and bleach activators, perfumes, malodor control agents, pigments, dyes, opacifiers, beads, pearlescent particles, microcapsules, antibacterial agents, pH adjusters including NaOH and alkanolamines such as monoethanolamines, buffering means, and divalent salts including divalent salts comprising magnesium and calcium cations.

The liquid manual dish wash detergent composition may have any suitable pH. Preferably the pH of the composition is adjusted to between 4 and 14. More preferably the composition has a pH of from 6 to 13, even more preferably from 6 to 10, most preferably from 7 to 9. The pH of the composition can be adjusted using pH modifying ingredients known in the art and is measured as a 10% product concentration in demineralised water at 25 °C. For example, NaOH may be used and the actual wt% of NaOH may be varied and trimmed up to the desired pH such as pH 8.0. In one embodiment of the present invention, a pH >7 is adjusted by using amines, preferably alkanolamines, more preferably triethanolamine.

The compositions of the present invention preferably have a viscosity of from 50 to 4000 mPa*s, more preferably from 100 to 2000 mPa*s, and most preferably from 500 to 1500 mPa*s at 20 1/s and 20 °C.

Compositions according to the invention can be used for washing dishware. Said method of washing dishes comprises the step of applying the composition, preferably in liquid form, onto the dishware surface, either directly or by means of a cleaning implement, i.e., in neat form. The composition is applied directly onto the surface to be treated and/or onto a cleaning device or implement such as a dish cloth, a sponge or a dish brush without undergoing major dilution (immediately) prior to the application. The cleaning device or implement is preferably wet before or after the composition is delivered to it. In the method of the invention, the composition can also be applied in diluted form.

Both neat and dilute application give rise to superior cleaning performance, i.e. the formulations of the invention containing the inventive amphiphilic alkoxylated polyethylene/-propylene imine copolymers exhibit excellent degreasing properties. The effort of removing fat and/or oily soils from the dishware is decreased due to the presence of the inventive amphiphilic alkoxylated polyethylene/-propylene imine copolymers, even when the level of surfactant used is lower than in conventional compositions.

## Examples

In the following paragraphs, some experimental examples are given in order to illustrate some aspects of the present invention.

### Synthesis of inventive and comparative examples

### Synthesis of polyamines

"N,N'-Bis-(3-aminopropyl)-ethylene diamine" is abbreviated as "N4-Amine" or "N4", "N,N-Bis-(3-aminopropyl)methylamine" is abbreviated as "BAPMA", "1,3-propylene diamine" is abbreviated as "1,3-PDA" or just "PDA" and "ethylene diamine" is abbreviated as "EDA" in the following.

### Example 1: Synthesis of linear polyethylene/-propylene imine copolymer (Poly(N4) Homopolymer) (A.1)

In a tubular reactor with an inner diameter of 10 mm equipped with an inner thermowell of 3.17 mm, N4-Amine was continuously led, together with 15 Nl/h hydrogen gas, over a fixed bed catalyst consisting of Co as the active metal. The pressure was 50 bar, the temperature 170°C. N4-amine was fed into the reactor with 0.3 kg/$L_{cat}$*h. The desired product was directly obtained as a water white liquid without any purification step in between.

### Example 2: Synthesis of linear polyethylene/-propylene imine copolymer (Poly(N4-co-PDA) Copolymer) (A.2)

In a tubular reactor with an inner diameter of 10 mm equipped with an inner thermowell of 3.17 mm, premixed 1 ,3-PDA and N4-Amine in a ratio of 3:1 wt% was continuously led, together with 15 Nl/h hydrogen gas, over a fixed bed catalyst consisting of Co as the active metal. The pressure was 50 bar, the temperature 165°C. The premixed

starting materials were fed into the reactor with 0.2 $kg/L_{cat}$*h. The desired product was directly obtained as a water white liquid without any purification step in between.

Example 3: Synthesis of linear polyethylene/-propylene imine copolymer (Poly(N4-co-PDA) Copolymer) (A.3)

In a tubular reactor with an inner diameter of 10 mm equipped with an inner thermowell of 3.17 mm, premixed 1 ,3-PDA and N4-Amine in a ratio of 3:1 wt% was continuously led, together with 15 Nl/h hydrogen gas, over a fixed bed catalyst consisting of Co as the active metal. The pressure was 50 bar, the temperature 170°C. The premixed starting materials were fed into the reactor with 0.2 $kg/L_{cat}$*h. The desired product was directly obtained as a water white liquid without any purification step in between.

Example 4: Synthesis of linear polyethylene/-propylene imine copolymer (Poly(N4-co-PDA-co-BAPMA) Terpolymer) (A.4)

In a tubular reactor with an inner diameter of 10 mm equipped with an inner thermowell of 3.17 mm, premixed 1 ,3-PDA, N4-Amine and BAPMA in a ratio of 4:3:3 wt% was continuously led, together with 15 Nl/h hydrogen gas, over a fixed bed catalyst consisting of Co as the active metal. The pressure was 50 bar, the temperature 170°C. The premixed starting materials were fed into the reactor with 0.28 $kg/L_{cat}$*h. The desired product was directly obtained as a water white liquid without any purification step in between.

Comparative example 1: Transamination of a mixture containing EDA and PDA (A.5)

In a tubular reactor with an inner diameter of 10 mm equipped with an inner thermowell of 3.17 mm, premixed 1 ,3-PDA and EDA in a ratio of 1:1 wt% was continuously led, together with 15 Nl/h hydrogen gas, over a fixed bed catalyst consisting of Co as the active metal. The pressure was 50 bar, the temperature 170°C. The premixed starting materials were fed into the reactor with 0.28 $kg/L_{cat}$*h. The desired product was directly obtained as a water white liquid without any purification step in between.

Comparative example 2: Synthesis of linear polypropylene imine homopolymer (Poly(PDA) Homopolymer) (A.6)

In a tubular reactor with an inner diameter of 10 mm equipped with an inner thermowell of 3.17 mm, 1,3-PDA was continuously led, together with 15 Nl/h hydrogen gas, over a fixed bed catalyst consisting of Co as the active metal. The pressure was 50 bar, the temperature 165°C. 1,3-PDA was fed into the reactor with 0.4 $kg/L_{cat}$*h. The desired product was directly obtained as a water white solid without any purification step in between.

Comparative example 3: Synthesis of linear polypropylene imine homopolymer (Poly(PDA) Homopolymer) (A.7)

In a tubular reactor with an inner diameter of 10 mm equipped with an inner thermowell of 3.17 mm, 1,3-PDA was continuously led, together with 15 Nl/h hydrogen gas, over a fixed bed catalyst consisting of Co as the active metal. The pressure was 50 bar, the temperature 170°C. 1,3-PDA was fed into the reactor with 0.3 $kg/L_{cat}$*h. The desired product was directly obtained as a water white solid without any purification step in between.

Comparative example 4: Synthesis of linear polypropylene imine homopolymer (Poly(BAPMA) Homopolymer) (A.8)

In a tubular reactor with an inner diameter of 10 mm equipped with an inner thermowell of 3.17 mm, BAPMA was continuously led, together with 15 Nl/h hydrogen gas, over a fixed bed catalyst consisting of Co as the active metal. The pressure was 50 bar, the temperature 160°C. BAPMA was fed into the reactor with 0.2 $kg/L_{cat}$*h. The desired product was directly obtained as a water white liquid without any purification step in between.

Synthesis of polyalkoxylates

Example 1: Synthesis of ethoxylated and propoxylated linear polyethylene/-propylene imine copolymer (Poly(N4) Homopolymer) (P.1)

180 g of the Poly(N4) Homopolymer (A.1) and 18 g water are charged to a steel pressure reactor. The reactor is purged with nitrogen to remove air and a nitrogen pressure of 1 bar is set. The reactor is heated to 100 °C and 156 g of ethylene oxide are dosed into the reactor within three hours. After that, the reaction mixture is kept at 100 °C for post reaction. Volatile compounds are removed under vacuum and 328.5 g of a yellow and highly viscous product is

removed from the reactor.

100 g of the previously obtained product are filled into a steel pressure reactor and 4.9 g of potassium hydroxide (50 wt% aqueous solution) are added. Water is removed under reduced pressure at 110 °C. The reactor is purged with nitrogen to remove air and a nitrogen pressure of 1 bar is set. The reactor is heated to 120 °C and 1114 g of ethylene oxide are dosed into the reactor within 14 hours. The mixture is allowed to post react for three hours. Volatile compounds are removed under vacuum and 1242.3 g of a dark yellow solid were obtained.

350 g of the previously obtained ethoxylate are filled into a steel pressure reactor and 1.1 g of potassium hydroxide (50 wt% aqueous solution) are added. Water is removed under reduced pressure at 110 °C. The reactor is purged with nitrogen to remove air and a nitrogen pressure of 1 bar is set. The reactor is heated to 130 °C and 287 g of propylene oxide are dosed into the reactor within five hours. The mixture is allowed to post react for three hours. Volatile compounds are removed under vacuum and 635.7 g of a yellow viscous liquid were obtained.

Example 2: Synthesis of ethoxylated and propoxylated linear polyethylene/-propylene imine copolymer (Poly(N4-co-PDA) Copolymer) (P.2)

214.1 g of the Poly(N4-co-PDA) Copolymer (A.2) and 10.7 g water are charged to a steel pressure reactor. The reactor is purged with nitrogen to remove air and a nitrogen pressure of 1 bar is set. The reactor is heated to 100 °C and 171 g of ethylene oxide are dosed into the reactor within ten hours. After that, the reaction mixture is kept at 100 °C for post reaction.

Volatile compounds are removed under vacuum and 383 g of a yellow and highly viscous product is removed from the reactor.

50 g of the previously obtained product are filled into a steel pressure reactor and 4.2 g of potassium hydroxide (50 wt% aqueous solution) are added. Water is removed under reduced pressure at 110 °C. The reactor is purged with nitrogen to remove air and a nitrogen pressure of 1 bar is set. The reactor is heated to 120 °C and 532.8 g of ethylene oxide are dosed into the reactor within ten hours. The mixture is allowed to post react for three hours. 582.7 g of the previously obtained ethoxylate are kept in the steel pressure reactor and the reactor is heated to 130 °C. 476 g of propylene oxide are dosed into the reactor within seven hours. The mixture is allowed to post react for six hours. Volatile compounds are removed under vacuum and 1047 g of a yellow highly viscous liquid were obtained.

Example 3: Synthesis of ethoxylated and propoxylated linear polyethylene/-propylene imine copolymer (Poly(N4-co-PDA) Copolymer) (P.3)

493.1 g of the Poly(N4-co-PDA) Copolymer (A.3) and 24.7 g water are charged to a steel pressure reactor. The reactor is purged with nitrogen to remove air and a nitrogen pressure of 1 bar is set. The reactor is heated to 100 °C and 335 g of ethylene oxide are dosed into the reactor within six hours. After that, the reaction mixture is kept at 100 °C for post reaction. Volatile compounds are removed under vacuum and 520 g of a yellow and highly viscous product is removed from the reactor.

55 g of the previously obtained product are filled into a steel pressure reactor and 2.4 g of potassium hydroxide (50 wt% aqueous solution) are added. Water is removed under reduced pressure at 110 °C. The reactor is purged with nitrogen to remove air and a nitrogen pressure of 2 bars is set. The reactor is heated to 120 °C and 556 g of ethylene oxide are dosed into the reactor within ten hours. The mixture is allowed to post react for three hours. 612 g of the previously obtained ethoxylate are kept in the steel pressure reactor and the reactor is heated to 130 °C. 477 g of propylene oxide are dosed into the reactor within seven hours. The mixture is allowed to post react for six hours. Volatile compounds are removed under vacuum and 1095 g of a brown highly viscous liquid were obtained.

Example 4: Synthesis of ethoxylated and propoxylated linear polyethylene/-propylene imine copolymer (Poly(N4-co-PDA-co-BAPMA) Terpolymer) (P.4)

400 g of the Poly(N4-co-PDA-co-BAPMA) Terpolymer (A.4) and 40 g water are charged to a steel pressure reactor. The reactor is purged with nitrogen to remove air and a nitrogen pressure of 1 bar is set. The reactor is heated to 100 °C and 265 g of ethylene oxide are dosed into the reactor within five hours. After that, the reaction mixture is kept at 100 °C for post reaction. Volatile compounds are removed under vacuum and 664 g of a yellow and highly viscous product is removed from the reactor.

120 g of the previously obtained product are filled into a steel pressure reactor and 5.1 g of potassium hydroxide (50 wt% aqueous solution) are added. Water is removed under reduced pressure at 110 °C. The reactor is purged with nitrogen to remove air and a nitrogen pressure of 0.5 bar is set. The reactor is heated to 120 °C and 1148 g of ethylene oxide are dosed into the reactor within 14 hours. The mixture is allowed to post react for four hours. Volatile compounds are removed under vacuum and 1281 g of a brownish solid were obtained.

350 g of the previously obtained ethoxylate are filled into a steel pressure reactor and 1.1 g of potassium hydroxide (50 wt% aqueous solution) are added. Water is removed under reduced pressure at 110 °C. The reactor is purged with nitrogen to remove air and a nitrogen pressure of 1 bar is set. The reactor is heated to 130 °C and 283 g of propylene oxide are dosed into the reactor within five hours. The mixture is allowed to post react for three hours. Volatile compounds are removed under vacuum and 625 g of a yellow viscous liquid were obtained.

Example 5: Synthesis of ethoxylated and propoxylated linear polyethylene/-propylene imine copolymer (Poly(N4) Homopolymer) (P.5)

180 g of the Poly(N4) Homopolymer (A.1) and 18 g water are charged to a steel pressure reactor. The reactor is purged with nitrogen to remove air and a nitrogen pressure of 1 bar is set. The reactor is heated to 100 °C and 156 g of ethylene oxide are dosed into the reactor within three hours. After that, the reaction mixture is kept at 100 °C for post reaction. Volatile compounds are removed under vacuum and 328.5 g of a yellow and highly viscous product is removed from the reactor.

100 g of the previously obtained product are filled into a steel pressure reactor and 4.9 g of potassium hydroxide (50 wt% aqueous solution) are added. Water is removed under reduced pressure at 110 °C. The reactor is purged with nitrogen to remove air and a nitrogen pressure of 1 bar is set. The reactor is heated to 120 °C and 1114 g of ethylene oxide are dosed into the reactor within 14 hours. The mixture is allowed to post react for three hours. Volatile compounds are removed under vacuum and 1242.3 g of a dark yellow solid were obtained.

350 g of the previously obtained ethoxylate are filled into a steel pressure reactor and 3.3 g of potassium hydroxide (50 wt% aqueous solution) are added. Water is removed under reduced pressure at 110 °C. The reactor is purged with nitrogen to remove air and a nitrogen pressure of 1 bar is set. The reactor is heated to 130 °C and 167 g of ethylene oxide are dosed into the reactor within two hours. The mixture is allowed to post-react for four hours, then, 662 g of propylene oxide are dosed into the reactor within eight hours. The mixture is allowed to post react for five hours. Volatile compounds are removed under vacuum and 1188 g of a yellow glassy solid were obtained.

Example 6: Synthesis of ethoxylated and propoxylated linear polyethylene/-propylene imine copolymer (Poly(N4-co-PDA) Copolymer) (P.6)

493.1 g of the Poly(N4-co-PDA) Copolymer (A.3) and 24.7 g water are charged to a steel pressure reactor. The reactor is purged with nitrogen to remove air and a nitrogen pressure of 1 bar is set. The reactor is heated to 100 °C and 335 g of ethylene oxide are dosed into the reactor within six hours. After that, the reaction mixture is kept at 100 °C for post reaction. Volatile compounds are removed under vacuum and 520 g of a yellow and highly viscous product is removed from the reactor.

73 g of the previously obtained product are filled into a steel pressure reactor and 4.6 g of potassium hydroxide (50 wt% aqueous solution) are added. Water is removed under reduced pressure at 110 °C. The reactor is purged with nitrogen to remove air and a nitrogen pressure of 2 bars is set. The reactor is heated to 120 °C and 1072 g of ethylene oxide are dosed into the reactor within 15 hours. The mixture is allowed to post react for six hours. 1149 g of a brownish solid was obtained after removal of volatile compounds under vacuum.

70 g of the previously obtained ethoxylate charged into a steel pressure reactor and the reactor is heated to 130 °C. The reactor is degassed with nitrogen and a pre-pressure of 2 bar ist set. 17 g of propylene oxide are dosed into the reactor within one hour. The mixture is allowed to post react for one hour. Volatile compounds are removed under vacuum and 82 g of a yellow highly viscous liquid were obtained.

Example 7: Synthesis of ethoxylated and propoxylated linear polyethylene/-propylene imine copolymer (Poly(N4-co-PDA-co-BAPMA) Terpolymer) (P.7)

400 g of the Poly(N4-co-PDA-co-BAPMA) Terpolymer (A.4) and 40 g water are charged to a steel pressure reactor. The reactor is purged with nitrogen to remove air and a nitrogen pressure of 1 bar is set. The reactor is heated to 100 °C and 265 g of ethylene oxide are dosed into the reactor within five hours. After that, the reaction mixture is kept at 100 °C for post reaction. Volatile compounds are removed under vacuum and 664 g of a yellow and highly viscous product is removed from the reactor.

120 g of the previously obtained product are filled into a steel pressure reactor and 5.1 g of potassium hydroxide (50 wt% aqueous solution) are added. Water is removed under reduced pressure at 110 °C. The reactor is purged with nitrogen to remove air and a nitrogen pressure of 0.5 bar is set. The reactor is heated to 120 °C and 1148 g of ethylene oxide are dosed into the reactor within 14 hours. The mixture is allowed to post react for four hours. Volatile compounds are removed under vacuum and 1281 g of a brownish solid were obtained.

350 g of the previously obtained ethoxylate are filled into a steel pressure reactor and 3.3 g of potassium

hydroxide (50 wt% aqueous solution) are added. Water is removed under reduced pressure at 110 °C. The reactor is purged with nitrogen to remove air and a nitrogen pressure of 0.5 bar is set. The reactor is heated to 130 °C and 165 g of ethylene oxide is dosed into the reactor within two hours. After post reaction time of four hours, 653 g of propylene oxide are dosed into the reactor within eight hours. The mixture is allowed to post react for four hours. Volatile compounds are removed under vacuum and 1180 g of a yellow viscous liquid were obtained.

Comparative example 1: Synthesis of the ethoxylated and propoxylated transamination product of EDA and PDA (CP.1)

95 g of the transamination product of EDA and PDA (A.5) and 9.5 g water are charged to a steel pressure reactor. The reactor is purged with nitrogen to remove air and a nitrogen pressure of 1 bar is set. The reactor is heated to 100 °C and 149 g of ethylene oxide are dosed into the reactor within three hours. After that, the reaction mixture is kept at 100 °C for post reaction. Volatile compounds are removed under vacuum and 234 g of a yellow, viscous product is removed from the reactor.

91 g of the previously obtained product are filled into a steel pressure reactor and 5.7 g of potassium hydroxide (50 wt% aqueous solution) are added. Water is removed under reduced pressure at 110 °C. The reactor is purged with nitrogen to remove air and a nitrogen pressure of 0.5 bar is set. The reactor is heated to 120 °C and 1334 g of ethylene oxide are dosed into the reactor within 14 hours. The mixture is allowed to post react for four hours. Volatile compounds are removed under vacuum and 1434 g of a dark yellow solid were obtained.

350 g of the previously obtained ethoxylate are filled into a steel pressure reactor and 1.2 g of potassium hydroxide (50 wt% aqueous solution) are added. Water is removed under reduced pressure at 110 °C. The reactor is purged with nitrogen to remove air and a nitrogen pressure of 1 bar is set. The reactor is heated to 130 °C and 293 g of propylene oxide are dosed into the reactor within five hours. The mixture is allowed to post react for three hours. Volatile compounds are removed under vacuum and 643 g of a yellow viscous liquid were obtained.

Comparative example 2: Synthesis of ethoxylated and propoxylated linear polypropylene imine homopolymer (Poly(PDA) Homopolymer) (CP.2)

200 g of the Poly(PDA) Homopolymer (A.6) and 19 g water are charged to a steel pressure reactor. The reactor is purged with nitrogen to remove air and a nitrogen pressure of 1 bar is set. The reactor is heated to 120 °C and 187 g of ethylene oxide are dosed into the reactor within six hours. After that, the reaction mixture is kept at 120 °C for post reaction. Volatile compounds are removed under vacuum and 390 g of a brown, highly viscous product is removed from the reactor.

44 g of the previously obtained product are filled into a steel pressure reactor and 4.0 g of potassium hydroxide (50 wt% aqueous solution) are added. Water is removed under reduced pressure at 120 °C. The reactor is purged with nitrogen to remove air and a nitrogen pressure of 2 bar is set. The reactor is kept at 120 °C and 507 g of ethylene oxide are dosed into the reactor within 14 hours. The mixture is allowed to post react for four hours. The reactor is heated to 130 °C and 453 g of propylene oxide are dosed into the reactor within twelve hours. The mixture is allowed to post react for six hours at 130 °C. Volatile compounds are removed under vacuum and 1010 g of a brown viscous liquid were obtained.

Comparative example 3: Synthesis of ethoxylated and propoxylated linear polypropylene imine homopolymer (Poly(PDA) Homopolymer) (CP.3)

167 g of the Poly(PDA) Homopolymer (A.7) and 14 g water are charged to a steel pressure reactor. The reactor is purged with nitrogen to remove air and a nitrogen pressure of 4 bar is set. The reactor is heated to 120 °C and 106 g of ethylene oxide are dosed into the reactor within two hours. After that, the reaction mixture is kept at 120 °C for post reaction. Volatile compounds are removed under vacuum and 270 g of a brown, highly viscous product is removed from the reactor.

76 g of the previously obtained product are filled into a steel pressure reactor and 5.5 g of potassium hydroxide (50 wt% aqueous solution) are added. Water is removed under reduced pressure at 120 °C. The reactor is purged with nitrogen to remove air and a nitrogen pressure of 1.5 bar is set. The reactor is kept at 120 °C and 705 g of ethylene oxide are dosed into the reactor within 10 hours. The mixture is allowed to post react for ten hours. The reactor is kept at 120 °C and 604 g of propylene oxide are dosed into the reactor within ten hours. The mixture is allowed to post react for four hours at 120 °C. Volatile compounds are removed under vacuum and 1390 g of a yellow viscous liquid were obtained.

Comparative example 4: Synthesis of ethoxylated and propoxylated linear polypropylene imine homopolymer (Poly(BAPMA) Homopolymer) (CP.4)

344 g of the Poly(BAPMA) Homopolymer (A.8) and 34.4 g water are charged to a steel pressure reactor. The reactor is purged with nitrogen to remove air and a nitrogen pressure of 4 bar is set. The reactor is heated to 100 °C and 132 g of ethylene oxide are dosed into the reactor within six hours. After that, the reaction mixture is kept at 100 °C for post reaction. Volatile compounds are removed under vacuum and 462 g of a brown, highly viscous product is removed from the reactor.

140 g of the previously obtained product are filled into a steel pressure reactor and 4.3 g of potassium hydroxide (50 wt% aqueous solution) are added. Water is removed under reduced pressure at 110 °C. The reactor is purged with nitrogen to remove air and a nitrogen pressure of 1 bar is set. The reactor is kept at 120 °C and 928 g of ethylene oxide are dosed into the reactor within 15 hours. The mixture is allowed to post react for two hours. 1072 g of a brown solid was obtained as product.

350 g of the obtained ethoxylate is charged into a steel pressure reactor and 1.1 g of potassium hydroxide (50 wt% aqueous solution) is added. Water is removed from the reactor at 110 °C under reduced pressure. The reactor is purged with nitrogen and is heated to 130 °C. 272 g of propylene oxide are dosed into the reactor within six hours. The mixture is allowed to post react for four hours at 130 °C. Volatile compounds are removed under vacuum and 612 g of a yellow viscous liquid were obtained.

Comparative example 5: Synthesis of ethoxylated and propoxylated ethylene diamine (CP.5)

300.5 g of EDA and 30 g water are charged to a steel pressure reactor. The reactor is purged with nitrogen to remove air and a nitrogen pressure of 4 bar is set. The reactor is heated to 100 °C and 705 g of ethylene oxide are dosed into the reactor within twelve hours. After that, the reaction mixture is kept at 100 °C for post reaction. Volatile compounds are removed under vacuum and 1010 g of a yellow, viscous product is removed from the reactor.

40 g of the previously obtained product are filled into a steel pressure reactor and 5.3 g of potassium hydroxide (50 wt% aqueous solution) are added. Water is removed under reduced pressure at 100 °C. The reactor is purged with nitrogen to remove air and a nitrogen pressure of 2 bar is set. The reactor is heated to 130 °C and 677 g of ethylene oxide are dosed into the reactor within six hours. The mixture is allowed to post react for three hours. Then, 604 g of propylene oxide are dosed into the reactor at 130 °C within six hours. The mixture is allowed to post react for four hours at 130 °C. Volatile compounds are removed under vacuum and 1330 g of a orange viscous liquid were obtained.

Comparative example 6: Synthesis of ethoxylated and propoxylated propylenediamine (CP.6)

356.5 g of PDA and 18 g water are charged to a steel pressure reactor. The reactor is purged with nitrogen to remove air and a nitrogen pressure of 2 bar is set. The reactor is heated to 100 °C and 679 g of ethylene oxide are dosed into the reactor within ten hours. After that, the reaction mixture is kept at 100 °C for post reaction. Volatile compounds are removed under vacuum and 996 g of a yellow, viscous product is removed from the reactor.

70 g of the previously obtained product are filled into a steel pressure reactor and 4.7 g of potassium hydroxide (50 wt% aqueous solution) are added. Water is removed under reduced pressure at 110 °C. The reactor is purged with nitrogen to remove air and a nitrogen pressure of 2 bar is set. The reactor is heated to 120 °C and 1102 g of ethylene oxide are dosed into the reactor within 15 hours. The mixture is allowed to post react for three hours at 120 °C. Volatile compounds are removed under vacuo and 1157 g of a brown solid was obtained as product.

337.7 g of the previously obtained ethoxylated are charged into a glass flask and 0.6 g potassium methanolate are added. Methanol is removed from the mixture at 90 °C and 20 mbar. This mixture is then charged to a steel pressure reactor and the reactor is purged with nitrogen. A pre-pressure of 2 ar is set to the reactor and the reactor is heated to 130 °C. Then, 284 g of propylene oxide are dosed into the reactor at 130 °C within six hours. The mixture is allowed to post react for four hours at 130 °C. Volatile compounds are removed under vacuum and 608 g of yellow viscous liquid were obtained.

Comparative example 7: Synthesis of ethoxylated and propoxylated N4-Amine (CP.7)

146 g of N4-Amine and 15 g water are charged to a steel pressure reactor. The reactor is purged with nitrogen to remove air and a nitrogen pressure of 2 bar is set. The reactor is heated to 100 °C and 178 g of ethylene oxide are dosed into the reactor within ten hours. After that, the reaction mixture is kept at 100 °C for post reaction. Volatile compounds are removed under vacuum and 312 g of a yellow, viscous product is removed from the reactor.

70 g of the previously obtained product are filled into a steel pressure reactor and 4.0 g of potassium hydroxide (50 wt% aqueous solution) are added. Water is removed under reduced pressure at 110 °C. The reactor is purged with

nitrogen to remove air and a nitrogen pressure of 2 bar is set. The reactor is heated to 120 °C and 919 g of ethylene oxide are dosed into the reactor within 12 hours. The mixture is allowed to post react for six hours at 120 °C. Volatile compounds are removed under vacuo and 1005 g of a brown solid was obtained as product.

546 g of the previously obtained ethoxylate are filled into a steel pressure reactor and 4.0 g of potassium hydroxide (50 wt% aqueous solution) are added. Water is removed under reduced pressure at 100 °C. The reactor is purged with nitrogen to remove air and a nitrogen pressure of 2 bar is set. The reactor is heated to 130 °C and 453 g of propylene oxide are dosed into the reactor within six hours. The mixture is allowed to post react for six hours at 130 °C. Volatile compounds are removed under vacuo and 1013 g of a brown solid was obtained as product.

Comparative example 8: Synthesis of ethoxylated and propoxylated polyethylene imine (PEI) (CP.8)

340 g of PEI ($M_w$ = 600 g/mol) and 34 g water are charged to a steel pressure reactor. The reactor is purged with nitrogen to remove air and a nitrogen pressure of 2 bar is set. The reactor is heated to 100 °C and 331 g of ethylene oxide are dosed into the reactor within six hours. After that, the reaction mixture is kept at 100 °C for post reaction. Volatile compounds are removed under vacuum and 666 g of a yellow, viscous product is removed from the reactor.

110 g of the previously obtained product are filled into a steel pressure reactor and 4.8 g of potassium hydroxide (50 wt% aqueous solution) are added. Water is removed under reduced pressure at 110 °C. The reactor is purged with nitrogen to remove air and a nitrogen pressure of 0.5 bar is set. The reactor is heated to 120 °C and 1088 g of ethylene oxide are dosed into the reactor within 14 hours. The mixture is allowed to post react for four hours at 120 °C. Volatile compounds are removed under vacuo and 1015 g of a brown solid was obtained as product.

350 g of the previously obtained ethoxylate are filled into a steel pressure reactor and 1.1 g of potassium hydroxide (50 wt% aqueous solution) are added. Water is removed under reduced pressure at 110 °C. The reactor is purged with nitrogen to remove air and a nitrogen pressure of 0.5 bar is set. The reactor is heated to 130 °C and 286 g of propylene oxide are dosed into the reactor within five hours. The mixture is allowed to post react for six hours at 130 °C. Volatile compounds are removed under vacuo and 632 g of a brown highly viscous liquid was obtained as product.

Comparative example 9: Synthesis of ethoxylated and propoxylated polyethylene imine (PEI) (CP.9)

Synthesis was performed as described in EP 2209837 B1, example 1.

Comparative example 10: Synthesis of ethoxylated polyethylene imine (PEI) (CP.10)

Synthesis was performed as described in EP 3039057 B1, example CE 1.

Characterization of polymers

Molecular weights of the polyamine starting materials were determined by gel permeation chromatography (GPC). The measurements were carried out on a column combination of three following columns: HFIP-LG Guard, PL HFIPGEL and PL HFIPGel. Elution was performed at a constant flow rate of 1 mL/min with Hexafluoroisopropanol and 0.05 wt% Potassium trifluroroacetate. The injected sample was prefiltered over a Millipore Millex FG (0.2 μm), 50 μL were injected with a concentration of 1.5 mg/mL (diluted in eluent). The effluent was monitored by the UV detector DRI Agilent 1100 at λ=230 and 280 nm. The calibration was carried out using PMMA standards (PSS, Mainz, Germany) with a molecular weight from 800 to 2 200 000 g/mol. Values outside of the calibration range were extrapolated.

Molecular weights of the di- and oligoamines (for preparation of the comparative polymers) were not measured since those materials were used in high purity (>99%), therefore their molecular weights are available based on their known molecular structure.

Molecular weights of the polyalkoxylates (both inventive and comparative) were obtained by theoretical calculations, using the determined weight-average molecular weights of the polyamine starting materials (or known molecular weights of the pure di-/oligoamines, respectively) and assuming complete conversion during the alkoxylation step (II). The calculations were performed as follows:
In case of co-/terpolymer backbones, first the molar ratio of the monomers in the polymer backbone has been calculated, based on the wt% composition of the materials. Subsequently, the average number of monomer-repeating units in the backbone has been calculated, based on the weight-average molecular weights of the polyamine starting materials (from GPC data, see above), the known molecular weights of the employed monomers and their molar ratio. Based on the known structural information of the employed monomers and their individual number of NH-functional groups, the total number of NH-functional groups of the polyamine starting materials has been obtained accordingly, which represent the sum of the NH-functional groups of all primary and secondary amino groups in the polymer backbone. In the second step, the average theoretical molecular weight of one polyalkoxylate chain has been calculated, using the employed

molar amount of both EO and PO per NH-functional group and assuming complete conversion during the alkoxylation step (II). In the third step, the overall molecular weight of the inventive amphiphilic alkoxylated polyethylene/-propylene imine copolymers and the comparative polymers, respectively, has been calculated, by (a) multiplication of the number of NH-functional groups of the polymer backbone and the average molecular weight of one polyalkoxylate chain - assuming that on average each polyalkoxylate chain has been attached to one available NH-functional group of the backbone - and (b) adding the molecular weight of the polymer backbone (from GPC data, see above) itself.

Composition and analytical data of the inventive amphiphilic alkoxylated polyethylene/-propylene imine copolymers and comparative polymers are summarized in Table 1.

"EO/NH" means ethylene oxide (EO) repeating units per NH group of the core amine, "PO/NH" means propylene oxide (PO) repeating units per NH group of the core amine. EO and PO units are attached to form EO/PO block structures, with EO units being directly linked to the amine core.

Table 1. Composition and physicochemical characterization of inventive amphiphilic alkoxylated polyethylene/-propylene imine copolymers and comparative polymers.

| Alkoxylate Polymer | Amine starting material | Monomer ratio (Amine) [wt%] | Molecular weight $M_w$ (Amine) [g/mol] | EO/ NH | PO/ NH | Molecular weight (Alkoxylate Polymer) [g/mol] |
|---|---|---|---|---|---|---|
| **P.1** | Poly(N4) Homopolymer (**A.1**) | N4: 100 | 700 | 20 | 13 | 25200 |
| **P.2** | Poly(N4-co-PDA) Copolymer (**A.2**) | N4:PDA 25:75 | 767 | 20 | 13 | 28600 |
| **P.3** | Poly(N4-co-PDA) Copolymer (**A.3**) | N4:PDA 25:75 | 1272 | 20 | 13 | 44600 |
| **P.4** | Poly(N4-co-PDA-coBAPMA) Terpolymer (**A.4**) | N4:PDA: BAPMA 30: 40:30 | 980 | 20 | 13 | 33000 |
| **P.5** | Poly(N4) Homopolymer (A.1) | N4: 100 | 700 | 30 | 30 | 46700 |
| **P.6** | Poly(N4-co-PDA) Copolymer (**A.3**) | N4:PDA 25:75 | 1272 | 30 | 30 | 82500 |
| **P.7** | Poly(N4-coPDA-co-BAPMA) | N4:PDA: BAPMA 30: 40:30 | 980 | 30 | 30 | 52800 |
| | Terpolymer (**A.4**) | | | | | |
| **CP.1** | Transamination product of EDA and PDA (**A.5**) | EDA:PDA 50: 50 | 124 | 20 | 13 | 8300 |
| **CP.2** | Poly(PDA) Homopolymer (=PPI) (**A.6**) | PDA: 100 | 459 | 20 | 13 | 15500 |
| **CP.3** | Poly(PDA) Homopolymer (=PPI) (**A.7**) | PDA: 100 | 1072 | 20 | 13 | 31600 |
| **CP.4** | Poly(BAPMA) Homopolymer (**A.8**) | BAPMA: 100 | 1630 | 20 | 13 | 26700 |
| **CP.5** | EDA * | - | 60 | 20 | 13 | 6600 |
| **CP.6** | PDA* | - | 74 | 20 | 13 | 6600 |
| **CP.7** | N4 * | - | 174 | 20 | 13 | 10000 |
| **CP.8** | PEI ** | - | 600 | 20 | 13 | 27100 |
| **CP.9** | PEI ** | - | 600 | 24 | 16 | 32900 |

(continued)

| | | | | | | |
|---|---|---|---|---|---|---|
| | Terpolymer (**A.4**) | | | | | |
| **CP.10** | PEI ** | - | 600 | 20 | 0 | 14600 |

*) EDA, PDA and N4-Amine, commercially available from BASF SE, Ludwigshafen, Germany.
**) Lupasol® FG, commercially available from BASF SE, Ludwigshafen, Germany.

CP1: Amphiphilic alkoxylate, based on the transamination product of EDA and 1,3-PDA. The transamination is only leading to cyclic and acyclic oligoamine mixtures containing homopiperazine and/or homopiperazine moieties, as described in EP2638020B1. No polyamine formation observed ($M_w$ (core) <150 g/mol).

CP.2/CP.3: Polymers similar to the polymers described in EP2961821B1 (GC.4/GC.5), i.e. amphiphilic alkoxylated polyamines based on PPI homopolymers

CP.4: Amphiphilic alkoxylated polyamine based on a Poly(BAPMA) homopolymer, i.e. homopolymer based on monomer (C), as described in WO2017009220

CP.5/CP.6/CP.7: Amphiphilic alkoxylated di- and oligoamines: The specific di- and oligoamines are identical to the monomer repeating units in the backbone of the inventive polymers, however, the transamination step to yield high $M_w$ polyamine backbones has been skipped

CP.8: Amphiphilic alkoxylated PEI, similar to the polymers described in EP2209837B1, but having a PEO-b-PPO modification which is identical to inventive polymers P.1-P.4

CP.9: Amphiphilic alkoxylated PEI, as described in EP2209837B1, example 1

CP.10: PEI ethoxylate, as described in EP 3039057 B1, example CE 1

<u>Application experiments</u>

Primary cleaning performance on oily/fatty stains

To determine the primary detergency, the cleaning performance on 16 different oily/fatty stains on cotton, polycotton and polyester fabrics (CFT, Vlaardingen, The Netherlands) was measured by determining the color difference (delta E) between the stains after wash and the unsoiled white fabric using a reflectometer (Datacolor SF600 plus). Each experiment containing the 16 different circular oily/fatty stains (Lipstick, Make-Up, Beef Fat, Frying Fat, Burnt Butter, Palm Oil, Sebum BEY, Sebum Tefo, Collar Stain; All on different fabrics) was repeated 6 times, and the obtained data was used to calculate the average delta E value.

By using these delta E values, the so-called "standardized cleaning performance" (delta delta E) has been calculated for each individual stain. The "standardized cleaning performance" (delta delta E) is the difference of the performance of the laundry detergent including the inventive amphiphilic alkoxylated polyethylene/-propylene imine copolymer or comparative polymer, respectively, vs. the laundry detergent w/o any inventive amphiphilic alkoxylated polyethylene/- propylene imine copolymer or comparative polymer, respectively.

Table 2 shows the composition of the laundry detergent, Table 3 shows the washing test conditions and Table 4 summarizes the obtained standardized cleaning performance. The standardized cleaning performance shown in Table 4 is the sum of the standardized cleaning performance of all 16 stains. The bigger the sum of the delta delta E value, the bigger the positive contribution of the inventive amphiphilic alkoxylated polyethylene/-propylene imine copolymer or comparative polymer, respectively, on the cleaning performance.

Table 2. Composition of the liquid laundry detergent.

| Ingredients | LLD.1 * |
|---|---|
| Linear $C_{12}C_{14}$-alkylbenzenesulfonic acid | 5.50 |
| $C_{12}$-fatty alcohol x 2 EO sulfate | 5.40 |
| $C_{12}C_{15}$-fatty alcohol x 7 EO | 5.40 |
| Coconut C12-C18 fatty acid | 2.40 |
| Sodium hydroxide | 2.20 |
| 1 ,2-Propylene glycol | 6.00 |
| Ethanol | 2.00 |
| Sodium citrate | 3.00 |
| Demin. water | add 100 |

(continued)

| Ingredients | LLD.1 * |
|---|---|
| pH value | 8.5 |
| *) All data are wt% active ingredient, independent of the respective product form. | |

Table 3. Washing conditions for evaluation of primary cleaning performance on oily/fatty stains.

| Washing conditions | |
|---|---|
| Device | Launder-O-Meter from SDL Atlas, Rock Hill, USA |
| Washing liquor | 250 mL |
| Washing time | 60 minutes |
| Washing temperature | 30 °C |
| Detergent concentration | 3.0 g/L |
| Water hardness (Ca:Mg:HCO3) | 2.5 mmol/L (4:1:8) (14 °dH) |
| Fabric to liquor ratio | 1:10 |
| Amphiphilic alkoxylated polyethylene/-propylene imine copolymer or comparative polymer addition | 2.83% by weight (vs. liquid laundry detergent) of the polymer, 100% active ingredient |
| Test fabric * | 16 different circular oily/fatty stains (KC-H122, KC-H176, KC-H015, KC-H187, PC-H082, PC-H212, PC-H210, PC-H252, P-H122, P-H129, P-H015, P-H187, P-H082, P-H212, P-H210, P-H252) (CFT, Vlaardingen, The Netherlands) |
| Ballast fabric | Polyester and cotton ballast, to yield a 1:1 ratio of polyester/cotton fabric per experiment |
| *) After the washing experiment, the test fabrics were rinsed with 14 °dH water (2 times), followed by drying at ambient room temperature overnight, prior to the measurement with the reflectometer. | |

Table 4. Results from washing tests (primary cleaning performance on oily/fatty stains).

| Detergent | Polymer | Concentration of polymeric additive * | Standardized cleaning performance (sum delta delta E) |
|---|---|---|---|
| LLD.1 | **P.1** | 2.83 wt% | 46.9 |
| LLD.1 | **P.2** | 2.83 wt% | 68.3 |
| LLD.1 | **P.3** | 2.83 wt% | 59.7 |
| LLD.1 | **P.4** | 2.83 wt% | 56.0 |
| LLD.1 | **P.5** | 2.83 wt% | 87.1 |
| LLD.1 | **P.6** | 2.83 wt% | 101.5 |
| LLD.1 | **P.7** | 2.83 wt% | 100.5 |
| LLD.1 | **CP.1** | 2.83 wt% | 42.1 |
| LLD.1 | **CP.2** | 2.83 wt% | 36.0 |
| LLD.1 | **CP.3** | 2.83 wt% | 45.8 |
| LLD.1 | **CP.4** | 2.83 wt% | 19.3 |
| LLD.1 | **CP.5** | 2.83 wt% | 22.4 |
| LLD.1 | **CP.6** | 2.83 wt% | 32.4 |
| LLD.1 | **CP.7** | 2.83 wt% | 9.1 |
| LLD.1 | **CP.8** | 2.83 wt% | 72.3 |
| LLD.1 | **CP.9** | 2.83 wt% | 88.2 |
| LLD.1 | **CP.10** | 2.83 wt% | -8.2 |
| *) All data are wt% active ingredient, independent of the respective product form. | | | |

The results from the washing tests clearly demonstrate the superior performance of the inventive polymers vs. the comparative polymers CP.1 - CP.7 described in the state of the art. More specifically, it can be clearly seen that the inventive polymers P.1 - P.4 containing the monomer (A) as a building block exhibit a significantly better performance than comparative polymers CP.2 - CP.4 based on a homopolymer made only from monomer (B) or only from monomer (C), at identical type of modification (20 EO/13 PO). In addition, it can be seen that the polymers CP.1 and CP.5 - CP.7 based on low $M_w$ oligoamine mixtures or specific di- and oligoamines do not lead to the same performance level as the inventive polymers, based on higher $M_w$ polyamines, at identical type of modification (20 EO/13 PO). Only the comparative polymers based on PEI and having an amphiphilic type of modification (CP.8 and CP.9) are showing a cleaning performance benefit on oily/fatty stains which is similar to the inventive structures, however, still worse compared to inventive polymers P.6 and P.7, which have longer EO/PO chains attached to their polyamine backbone.

Secondary cleaning performance, mixed stains

To determine the secondary detergency, the whiteness of 7 different test fabrics was measured by determining the color difference (delta E) between the test fabrics after wash and the unsoiled (white) test fabric before wash, using a reflectometer (Datacolor SF600 plus).

By using these delta E values, the so-called "standardized cleaning performance" (delta delta E) has been calculated for each individual fabric. The "standardized cleaning performance" (delta delta E) is the difference of the performance of the laundry detergent including the respective inventive amphiphilic alkoxylated polyethylene/-propylene imine copolymer or comparative polymer, respectively, vs. the laundry detergent w/o any inventive amphiphilic alkoxylated polyethylene/-propylene imine copolymer or comparative polymer, respectively.

Table 2 shows the composition of the laundry detergent, Table 5 shows the washing test conditions and Table 6 summarizes the obtained standardized cleaning performance. The standardized cleaning performance shown in Table 6 is the sum of the standardized cleaning performance of all 7 test fabrics. The bigger the sum of the delta delta E value, the whiter the fabrics after wash and therefore the bigger the positive contribution (anti-redeposition benefit) of the respective inventive amphiphilic alkoxylated polyethylene/-propylene imine copolymer or comparative polymer, respectively, on the secondary cleaning performance.

Table 5. Washing conditions for evaluation of secondary cleaning performance.

| Washing conditions | |
|---|---|
| Device | Linitest+ from SDL Atlas, Rock Hill, USA |
| Washing liquor | 200 mL |
| Washing time | 30 minutes |
| Washing temperature | 40 °C |
| Detergent concentration | 3.0 g/L |
| Water hardness (Ca:Mg: HCO3) | 2.5 mmol/L (4:1:8) (14 °dH) |
| Fabric to liquor ratio | 1:10 |
| Washing cycles * | 2 |
| Amphiphilic alkoxylated polyethylene/-propylene imine copolymer or comparative polymer addition | 2.83% by weight (vs. liquid laundry detergent) of the polymer, 100% active ingredient |
| Test fabric ** | 7 different test fabrics (in total: ca 7.8 g): 1.0 g WFK 10A (standard cotton), 2.0 g WFK 12A (cotton terry cloth), 0.9 g WFK 80A (cotton knit) (fabrics from WFK Testgewebe GmbH, Brueggen, Germany), 1.1 g EMPA 221 (cotton fabric, cretonne, bleached, without optical brightener; EMPA Testmaterials, St. Gallen, Switzerland), 1.0 g WFK20A (polyester 65%, cotton 35%), 1.0 g WFK30A (polyester), 0.8 g EMPA 406 (polyamide 6.6 spun, type 200, plain weave, ISO 105-F03) |

(continued)

| Washing conditions | |
|---|---|
| Soiled fabric *** | 3 pieces of a circular red poterry clay stain on knitted cotton (diameter: 2 cm; weight: each ca. 3.2 g; CFT, Vlaardingen, The Netherlands ); + 2.5 g SBL 2004 (Soil Ballast Fabric 'Formula 2004' that simulates sebum grease stains; WFK Testgewebe GmbH, Brueggen, Germany) |

*) After each cycle, the test fabrics were rinsed with 14 °dH water (2 times), followed by drying at ambient room temperature overnight.
**) After the end of the washing experiment, the test fabrics were rinsed with 14 °dH water (2 times), followed by drying at ambient room temperature overnight, prior to the measurement with the reflectometer.
***) New soiled fabric was used for each cycle.

Table 6. Results from washing tests (secondary cleaning performance, mixed stains).

| Detergent | Polymer | Concentration of polymeric additive* | Standardized cleaning performance (sum delta delta E) |
|---|---|---|---|
| LLD.1 | **P.1** | 2.83 wt% | 17.5 |
| LLD.1 | **P.2** | 2.83 wt% | 33.3 |
| LLD.1 | **P.3** | 2.83 wt% | 22.8 |
| LLD.1 | **P.4** | 2.83 wt% | 17.4 |
| LLD.1 | **P.5** | 2.83 wt% | 18.5 |
| LLD.1 | **P.6** | 2.83 wt% | 11.9 |
| LLD.1 | **P.7** | 2.83 wt% | 21.4 |
| LLD.1 | **CP.1** | 2.83 wt% | -5.6 |
| LLD.1 | **CP.2** | 2.83 wt% | 15.4 |
| LLD.1 | **CP.3** | 2.83 wt% | 30.8 |
| LLD.1 | **CP.4** | 2.83 wt% | 17.0 |
| LLD.1 | **CP.5** | 2.83 wt% | 7.0 |
| LLD.1 | **CP.6** | 2.83 wt% | 4.4 |
| LLD.1 | **CP.7** | 2.83 wt% | 12.2 |
| LLD.1 | **CP.8** | 2.83 wt% | 9.0 |
| LLD.1 | **CP.9** | 2.83 wt% | 7.0 |
| LLD.1 | **CP.10** | 2.83 wt% | 8.8 |

*) All data are wt% active ingredient, independent of the respective product form.

The results from the washing tests clearly demonstrate the superior performance of the inventive polymers vs. the benchmark polymer for secondary cleaning performance/whiteness maintenance in general (ethoxylated PEI, CP.10) and also vs. the comparative polymers based on PEI (CP.8 and CP.9) described in the state of the art. It can be clearly seen that the comparative polymer based on the low $M_w$ transamination product of EDA and 1,3-PDA (CP.1) leads to very poor secondary cleaning performance - in fact, the comparative polymer CP.1 even leads to more soil on the fabric compared to the experiment w/o polymer (negative sum delta delta E). In contrast, the comparative polymers CP.2/CP.3 and CP.7 lead to a secondary cleaning performance level similar to that of the inventive polymers, however, their primary cleaning performance on oily/fatty stains was already distinctively worse (cf. Table 4).

Primary cleaning performance on particulate stains

To determine the primary detergency, the cleaning performance on 4 different particulate stains on a polyester fabric (CFT, Vlaardingen, The Netherlands) was measured by determining the color difference (delta E) between the stains after wash and the unsoiled white fabric using a reflectometer (Datacolor SF600 plus). Each experiment containing the 4 different circular particulate stains (Clay ground soil, Standard clay, Red pottery clay, Tennis court clay; All 4 stains on one polyester fabric, 2 of those fabrics per wash) was repeated 3 times, and the obtained data was used to calculate the average delta E value.

By using these delta E values, the so-called "standardized cleaning performance" (delta delta E) has been calculated for each individual stain. The "standardized cleaning performance" (delta delta E) is the difference of the performance of the laundry detergent including the respective inventive amphiphilic alkoxylated polyethylene/-propylene imine copolymer or comparative polymer, respectively, vs. the laundry detergent w/o any inventive amphiphilic alkoxylated polyethylene/-propylene imine copolymer or comparative polymer, respectively.

Table 2 shows the composition of the laundry detergent, Table 7 shows the washing test conditions and Table 8 summarizes the obtained standardized cleaning performance. The standardized cleaning performance shown in Table 8 is the sum of the standardized cleaning performance of all 4 stains. The bigger the sum of the delta delta E value, the bigger the positive contribution of the respective inventive amphiphilic alkoxylated polyethylene/-propylene imine copolymer or comparative polymer, respectively, on the cleaning performance.

Table 7. Washing conditions for evaluation of primary cleaning performance on particulate stains.

| Washing conditions | |
|---|---|
| Device | Launder-O-Meter from SDL Atlas, Rock Hill, USA |
| Washing liquor | 250 mL |
| Washing time | 30 minutes |
| Washing temperature | 30 °C |
| Detergent concentration | 3.0 g/L |
| Water hardness (Ca:Mg:NCO3) | 2.5 mmol/L (4:1:8) (14 °dH) |
| Fabric to liquor ratio | 1:10 |
| Amphiphilic alkoxylated polyethylene/-propylene imine copolymers or comparative polymer addition | 3.33% by weight (vs. liquid laundry detergent) of the polymer (or combination of polymers), 100% active ingredient |
| Test fabric * | 4 different circular particulate stains (P-H018, P-H115, P-H144, P-H145) (CFT, Vlaardingen, The Netherlands) on one polyester fabric; 2 stained fabrics per wash |
| Ballast fabric | 2.5 g SBL 2004 (Soil Ballast Fabric ’Formula 2004’ that simulates sebum grease stains; WFK Testgewebe GmbH, Brueggen, Germany); + additional white polyester and cotton ballast, to yield a 1:1 ratio of polyester/cotton fabric per experiment |

*) After the washing experiment, the test fabrics were rinsed with 14 °dH water (2 times), followed by drying at ambient room temperature overnight, prior to the measurement with the reflectometer.

Table 8. Results from washing tests (primary cleaning performance on particulate stains).

| Detergent | Inventive Polymer | Concentration of inventive polymeric additive * | Non-inventive Polymer | Concentration non-inventive polymeric additive * | Standardized cleaning performance (sum delta delta E) |
|---|---|---|---|---|---|
| LLD.1 | **P.4** | 3.33 wt% | - | | 5.6 |
| LLD.1 | - | - | **CP.10** | 3.33 wt% | 4.8 |
| LLD.1 | - | - | **Sokalan® HP96** | 3.33 wt% | 4.9 |
| LLD.1 | **P.4** | 1.67 wt% | **CP.10** | 1.67 wt% | 5.9 |
| LLD.1 | **P.4** | 1.67 wt% | **Sokalan® HP96** | 1.67 wt% | 7.6 |

*) All data are wt% active ingredient, independent of the respective product form.

The results from the washing tests demonstrate that the inventive polymer P.4 exhibits slightly better primary cleaning performance for particulate stains than the comparative polymer CP.10 (multifunctional polyethyleneimine) or than a known multifunctional diamine from the state-of-the-art (commercially available as Sokalan® HP96, BASF SE, Ludwigshafen, Germany). It can be also clearly seen that a 1:1 (by weight) combination of the inventive polymer P.4 and one of the two non-inventive polymers, known in the state-of-the-art for their excellent primary cleaning performance

for particulate stains, leads to further improved benefits (synergistic effects), at identical concentrations.

Manual dish wash detergent formulations

A range of different inventive liquid manual dish wash formulations have been prepared, using the inventive amphiphilic alkoxylated polyethylene/-propylene imine copolymer P.7. The details of the detergent compositions are shown in Table 9 below.

Table 9. Compositions of inventive liquid manual dish wash detergents.

| Ingredients | MDW. 1 | MDW. 2 | MDW. 3 | MDW. 4 | MDW. 5 | MDW. 6 | MDW. 7 | MDW. 8 |
|---|---|---|---|---|---|---|---|---|
| Linear $C_{12}C_{14}$-alkylbenzenesulfonic acid | 8 | 0 | 6 | 0 | 6 | 0 | 6 | 0 |
| $C_{12}$-fatty alcohol x 2 EO sulfate | 8 | 16 | 6 | 12 | 6 | 12 | 6 | 12 |
| Cocamidopropyl betaine | 0 | 0 | 4 | 4 | 0 | 0 | 2 | 2 |
| Lauramine oxide | 0 | 0 | 0 | 0 | 4 | 4 | 2 | 2 |
| 2-Propylheptanol x 4 EO | 0.5 | 0.5 | 0.5 | 0.5 | 0.5 | 0.5 | 0.5 | 0.5 |
| Amphiphilic alkoxylated polyethylene/- propylene imine copolymer **P.7** | 1 | 1 | 1 | 1 | 1 | 1 | 1 | 1 |
| Ethanol | 2 | 2 | 2 | 2 | 2 | 2 | 2 | 2 |
| 2-Phenoxyethanol (preservative) | 1 | 1 | 1 | 1 | 1 | 1 | 1 | 1 |
| Sodium chloride | 1 | 1 | 1 | 1 | 1 | 1 | 1 | 1 |
| Demin. water | add 100 | add 100 | add 100 | add 100 | add 100 | add 100 | add 100 | add 100 |
| Sodium hydroxide | add pH 8 | add pH 8 | add pH 8 | add pH 8 | add pH 8 | add pH 8 | add pH 8 | add pH 8 |

*) All data are wt% active ingredient, independent of the respective product form.

Melting point of amine starting materials

The melting point of the amine starting materials was measured with a TA Instruments Q2000 device, following DIN EN 11357-3.

Table 10. Melting points of polyamines (starting materials).

| Amine starting material | Monomer ratio (Amine) [wt%] | Molecular weight $M_w$ (Amine) [g/mol] | Melting Point [°C] |
|---|---|---|---|
| Poly(N4) Homopolymer (**A.1**) | N4: 100 | 700 | 13.0 |
| Poly(N4-co-PDA) Copolymer (**A.2**) | N4:PDA 25:75 | 767 | 26.3 |
| Poly(N4-co-PDA-co-BAPMA) Terpolymer (**A.4**) | N4:PDA:BAPMA 30: 40:30 | 980 | -2.9 |
| Poly(PDA) Homopolymer (=PPI) (**A.6**) | PDA: 100 | 459 | 35.3 |
| Poly(PDA) Homopolymer (=PPI) (**A.7**) | PDA: 100 | 1072 | 44.4 |
| Poly(BAPMA) Homopolymer (**A.8**) | BAPMA: 100 | 1630 | 1.0 |

The analytical data demonstrate that the polyamine backbones of the inventive polymers (A.1, A.2, A.4) have significantly lower melting points than the polyamine backbones of the comparative polymers in case they are solely based on 1,3-PDA (i.e. homopolymers A.6, A.7). The melting point of the polyamine backbone A.8 based on monomer (C) alone, which is further used for preparation of comparative polymer CP.4, is even lower than some of the inventive polyamine backbones, however, the primary cleaning performance of CP.4 is extremely poor (cf. Table 4).

Summary of the application examples:

The experimental examples show that only the inventive polymers exhibit very good cleaning benefits for primary cleaning of oily/fatty stains (specifically vs. comparative polymers based on other polypropylene imines or di-/oligoamines) and at the same time also for secondary cleaning performance/whiteness maintenance (specifically vs. comparative polymers based on polyethylene imines). Furthermore, the polyamine backbones of the inventive amphiphilic alkoxylated polyethylene/-propylene imine copolymers exhibit significantly lower melting points compared to other polypropylene imines, thus enabling a better handling in the production process. The inventive polymers are therefore ideally suitable for preparation of multi-benefit detergent formulations, and specifically for improved oily soil removal in laundry care and improved degreasing properties in manual dishwashing.

## Claims

1. Amphiphilic alkoxylated polyethylene/-propylene imine copolymers, comprising in condensed form repeating units of monomer (A), optionally monomer (B), and/or optionally monomer (C), wherein

   monomer (A) is represented by the formula

   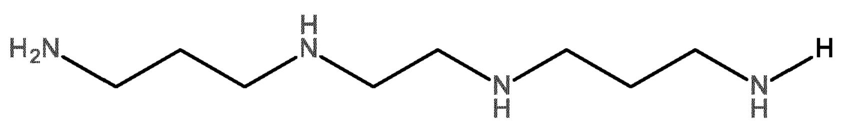

   ,

   monomer (B) is represented by the formula

   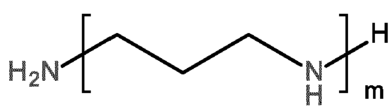

   ,

   and monomer (C) is represented by the formula

   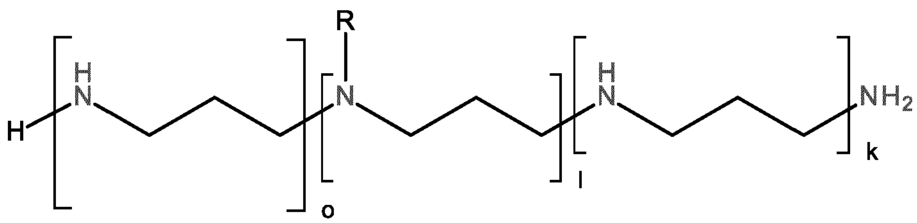

   wherein m is in the range from 1 to 4, l is in the range from 1 to 3, k is 0 or 1, o is 0 or 1, and R is a C1 to C18 alkyl moiety,
   and wherein each NH-functional group has been directly linked by a covalent bond to an alkoxy chain (A) of the composition

   $$-(A^1O)_a-(A^2O)_b-(A^3O)_c-R',$$

   wherein $A^1$ is C3-C12 alkylene, a is from 0 to 2, $A^2$ is ethylene, b is from 5 to 50, $A^3$ is 1,2-propylene, c is from 5 to 50, R' is selected from H or C1-C4 alkyl, and wherein the alkyleneoxy units are preferably attached as block structures.

2. Amphiphilic alkoxylated polyethylene/-propylene imine copolymers according to claim 1, comprising in condensed form repeating units of monomer (A) and either monomer (B) or monomer (C), preferably monomer (A) and monomer (B).

3. Amphiphilic alkoxylated polyethylene/-propylene imine copolymers according to claim 1, comprising in condensed form repeating units of monomer (A) and monomer (B) and monomer (C).

4. Amphiphilic alkoxylated polyethylene/-propylene imine copolymers according to any one of claims 1 to 3, wherein m is 1, 2 or 3, preferably 1, and/or wherein I is 1, and/or wherein k is 1, and/or wherein o is 1, and/or wherein R is a C1 to C4 alkyl moiety, preferably methyl, and/or wherein R' is hydrogen.

5. Amphiphilic alkoxylated polyethylene/-propylene imine copolymers according to any one of claims 1 to 4, wherein the weight-average molecular weight $M_w$ of the polyethylene/- propylene imine backbone without alkoxy chains is at least 300 g/mol, preferably at least 500 g/mol.

6. Amphiphilic alkoxylated polyethylene/-propylene imine copolymers according to any one of claims 1 to 5, wherein a is 0, and/or b is 10 to 40, preferably 15 to 35, and/or c is 5 to 40, preferably 10 to 35, and/or wherein the molar ratio EO/PO >0.8, preferably >=1.

7. Amphiphilic alkoxylated polyethylene/-propylene imine copolymers according to any one of claims 3 to 6, wherein m is 1, k is 1, o is 1, I is 1, R is methyl, R' is hydrogen, and wherein the amount of monomer (A), monomer (B) and monomer (C) in the polyethylene/-propylene imine backbone without alkoxy chains is each at least 10 wt% and at most 50 wt%.

8. Polyethylene/-propylene imine copolymers before alkoxylation, comprising in condensed form repeating units of monomer (A) and monomer (B) and monomer (C), as defined above in any one of claims 1 to 7.

9. Process for manufacturing amphiphilic alkoxylated polyethylene/-propylene imine copolymers according to any one of claims 1 to 7, wherein (I)

a monomer (A)

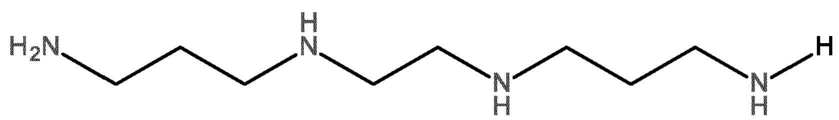

,

and optionally a monomer (B)

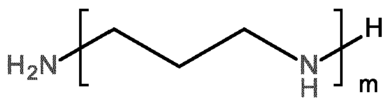

, and/or optionally a monomer (C)

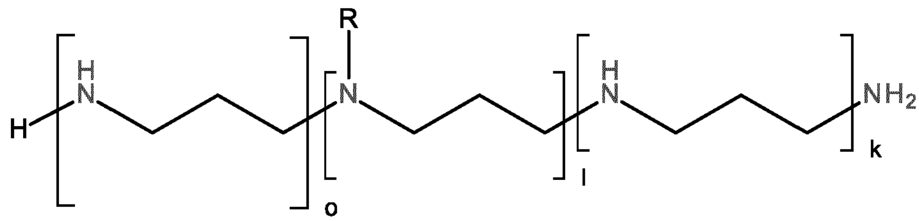

wherein k, l, m, o and R are as defined in any one of claims 1 to 7, is catalytically reacted with hydrogen, optionally purified, then (II) reacted with ethylene oxide, followed by reaction with propylene oxide.

10. Process for manufacturing amphiphilic alkoxylated polyethylene/-propylene imine copolymers according to claim 9, wherein the catalyst for the reaction with hydrogen contains cobalt and/or manganese and/or wherein the catalyst is a fixed bed catalyst, and/or wherein the reaction temperature during the reaction with hydrogen is in the range

from 50 to 200 °C, and/or wherein the pressure during the reaction with hydrogen is between 30 and 100 bar.

**11.** Amphiphilic alkoxylated polyethylene/-propylene imine copolymers, obtainable by a process as described in claim 9 or 10.

**12.** Detergent composition, in particular a laundry detergent composition or a manual dish wash detergent composition, comprising (i) at least one amphiphilic alkoxylated polyethylene/- propylene imine copolymer according to any one of claims 1 to 7, and (ii) at least one surfactant.

**13.** Detergent composition according to claim 12, wherein the composition is liquid or solid, preferably liquid.

**14.** Detergent composition according to claim 12 or 13, comprising (i) at least one amphiphilic alkoxylated polyethylene/-propylene imine copolymer according to any one of claims 1 to 7, and (ii) at least one anionic surfactant, and (iii) water.

**15.** Detergent composition according to claim 12, 13 or 14, comprising (i) at least one amphiphilic alkoxylated polyethylene/-propylene imine copolymer according to any one of claims 1 to 7, and (ii) at least one further polymer selected from multifunctional polyethylene imines or multifunctional diamines, or mixtures thereof.

**16.** Detergent composition according to claim 12, 13 or 14, comprising (i) at least one amphiphilic alkoxylated polyethylene/-propylene imine copolymer according to any one of claims 1 to 7, and (ii) at least one further 2-propylheptyl ethoxylated non-ionic surfactant having an average degree of ethoxylation of from 3 to 5.

**17.** Detergent composition according to any one of claims 12 to 16, further comprising 2-phenoxyethanol and/or 4,4'-dichloro-2-hydroxydiphenylether.

**18.** Use of amphiphilic alkoxylated polyethylene/-propylene imine copolymers according to any one of claims 1 to 7 for laundry care or manual dishwashing.

**19.** Use of amphiphilic alkoxylated polyethylene/-propylene imine copolymers according to claim 18 for oily and/or fatty soil removal and whiteness improvement, preferably in laundry care.

**20.** Use of amphiphilic alkoxylated polyethylene/-propylene imine copolymers according to any one of claims 1 to 7 as additive for detergent formulations, particularly for liquid detergent formulations, preferably concentrated liquid detergent formulations, or single mono doses for laundry.

**Patentansprüche**

**1.** Amphoter modifizierte Oligopropyleniminethoxylate (A) der allgemeinen Formel (I)

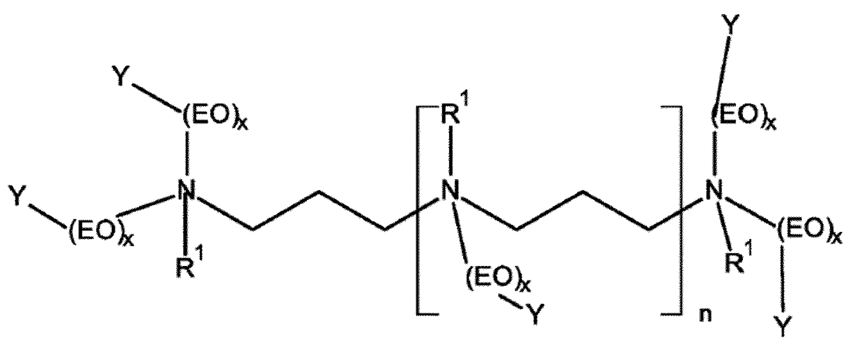

(I)

wobei

die Variablen $R^1$ gleich oder verschieden sind und aus $C_1$-$C_4$-Alkyl, H und einem freien Elektronenpaar ausgewählt sind, wobei mindestens 50 %, bevorzugt mindestens 80 %, weiter bevorzugt mindestens 90 %, aller Variablen $R^1$ für $C_1$-$C_4$-Alkyl stehen,

EO $-CH_2-CH_2-O$ bedeutet,
die Variablen Y gleich oder verschieden sind und aus $SO_3^-$ und H ausgewählt sind, wobei mindestens 30 %, bevorzugt mindestens 50 %, aller Variablen Y für $SO_3^-$ stehen,
die Variablen x gleich oder verschieden sind und aus 5 bis 50, bevorzugt 10 bis 40, ausgewählt sind und n aus 1, 2 und 3 ausgewählt ist.

2. Amphoter modifizierte Oligopropyleniminethoxylate (A) nach Anspruch 1, wobei n = 1, 2 oder 3, mindestens 80 % von $R^1$ für $C_1$-$C_4$-Alkyl stehen und das Verhältnis von $R^1$ = $C_1$-$C_4$-alkyl zu Y = $SO_3^-$ im Durchschnitt 1,0: 1,0 bis 1,0:0,8 beträgt.

3. Amphoter modifizierte Oligopropyleniminethoxylate (A) nach Anspruch 1 oder 2, wobei n = 2 oder 3 und mindestens 90 % aller $R^1$ für Methyl stehen.

4. Amphoter modifizierte Oligopropyleniminethoxylate (A) nach Anspruch 1 oder 2, wobei n = 2, mindestens 90 % aller $R^1$ für Methyl stehen und x = 15-30.

5. Gemisch von Verbindungen, umfassend mindestens ein amphoter modifiziertes Oligopropyleniminethoxylat (A) nach Anspruch 1, 2, 3 oder 4, wobei n = 2, und mindestens eine isomere Verbindung gemäß Formel (II)

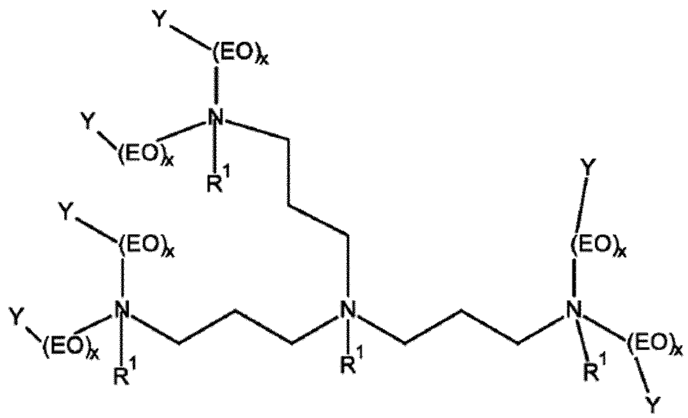

(II)

wobei

die Variablen $R^1$ gleich oder verschieden sind und aus $C_1$-$C_4$-Alkyl, H und einem freien Elektronenpaar ausgewählt sind, wobei mindestens 50 %, bevorzugt mindestens 80 %, weiter bevorzugt mindestens 90 %, aller Variablen $R^1$ für $C_1$-$C_4$-Alkyl stehen,
EO $-CH_2-CH_2-O$ bedeutet,
die Variablen Y gleich oder verschieden sind und aus $SO_3^-$ und H ausgewählt sind, wobei mindestens 30 %, bevorzugt mindestens 50 %, aller Variablen Y für $SO_3^-$ stehen,
die Variablen x gleich oder verschieden sind und aus 5 bis 50 ausgewählt sind.

6. Gemisch nach Anspruch 5, umfassend mindestens ein amphoter modifiziertes Oligopropyleniminethoxylat (A) gemäß Formel (I) und Verbindungen gemäß Formel (II) in einem Molverhältnis im Bereich von 1:10 oder darüber.

7. Gemisch, umfassend eine Verbindung nach einem der Ansprüche 1 bis 4 oder Gemisch von Verbindungen nach Anspruch 5 oder 6, wobei das Gemisch zusätzlich das Sulfat eines Alkalimetalls und/oder ein Amin umfasst.

8. Gemisch nach Anspruch 7, wobei das Gemisch zusätzlich das Sulfatsalz eines Alkanolamins umfasst.

9. Verfahren zur Herstellung von amphoter modifizierten Oligopropyleniminethoxylaten (A) nach Anspruch 1, 2, 3 oder 4, wobei das Verfahren folgende Schritte umfasst:

(a) Bereitstellen eines Amins, ausgewählt aus Ammoniak, 1,3-Propylendiamin, Bis(3,3'-aminopropyl)amin und Bis(3,3'-aminopropyl)-1,3-propylendiamin oder Mischungen davon,
(b) gegebenenfalls Cyanoethylierung des Amins mit Acrylnitril in einem Verhältnis 100:1 bis 1:2,5 mit anschließender Hydrierung zum Erhalt von Oligopropyleniminen mit 2, 3 und 4 Wiederholungseinheiten,
(c) gegebenenfalls Reinigung der Oligopropylenimine aus Schritt (b),
(d) Ethoxylierung des Amins und/oder Oligopropylenimins aus Schritt a, b oder c, und
(e) zumindest teilweise Quaternisierung und Transsulfatierung mit einem Di-$C_1$-$C_4$-alkylsulfat.

**10.** Verfahren nach Anspruch 9, wobei der Reinigungsschritt (c) durchgeführt wird, um Oligopropylenimine mit 2, 3 und 4 Wiederholungseinheiten oder Gemische davon mit einer Reinheit von mindestens 80 Gew.-% zu erhalten.

**11.** Verfahren nach Anspruch 9 oder 10, wobei die zumindest teilweise Quaternisierung in Schritt (e) mit Dimethylsulfat durchgeführt wird.

**12.** Verfahren nach Anspruch 9, 10 oder 11, wobei die Transsulfatierung in Schritt (e) mit Schwefelsäure als Katalysator durchgeführt wird.

**13.** Verfahren nach Anspruch 9, 10, 11 oder 12, wobei die Transsulfatierung in Schritt (e) quantitativ (>=80 %) durchgeführt wird und ein leicht kationisches oder insgesamt neutrales Polymer erhalten wird.

**14.** Verfahren nach einem der Ansprüche 9 bis 13, wobei das Verfahren den nachfolgenden Schritt der Neutralisation der Schwefelsäure mit einer Base aus der Gruppe der Alkalimetallhydroxide und Amine umfasst.

**15.** Verfahren nach Anspruch 14, wobei die Base für die Neutralisation der Schwefelsäure aus der Gruppe der Alkanolamine ausgewählt wird.

**16.** Verfahren nach einem der Ansprüche 9 bis 15, wobei die Ethoxylierung in Schritt (d) in zwei Unterschritten durchgeführt wird:

(i) Umsetzung mit bis zu einem Mol Ethylenoxid pro N-H-Funktion gefolgt von
(ii) Umsetzung mit weiterem Ethylenoxid unter alkalischer Katalyse.

**17.** Amphoter modifizierte Oligopropyleniminethoxylate (A) nach Anspruch 1, 2, 3 oder 4, die durch ein Verfahren nach einem der Ansprüche 9 bis 16 erhältlich sind.

**18.** Verwendung von amphoter modifizierten Oligopropyleniminethoxylaten (A) nach Anspruch 1, 2, 3 oder 4 oder Gemischen nach einem der Ansprüche 5 bis 8 bei Wäscheanwendungen.

**19.** Wäscheformulierung, umfassend mindestens eines der amphoter modifizierten Oligopropyleniminethoxylate (A) nach einem der Ansprüche 1 bis 4 und/oder ein Gemisch nach einem der Ansprüche 5 bis 8.

**20.** Wäscheformulierung nach Anspruch 19, ferner umfassend 2-Phenoxyethanol und/oder 4,4'-Dichlor-2-hydroxydiphenylether.

## Revendications

**1.** Éthoxylates d'oligopropylèneimine modifiés de manière amphotère (A) de formule générale (I)

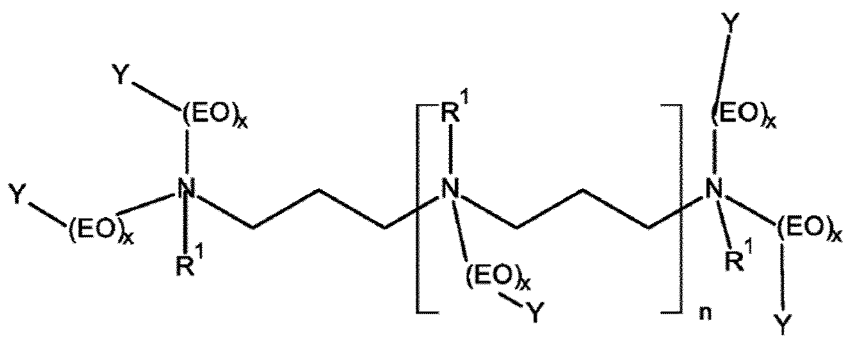

(I)

$R^1$ étant identiques ou différentes et sélectionnés parmi $C_1$-$C_4$-alkyle, H et une paire d'électrons libres, au moins 50 %, de préférence au moins 80 %, de préférence au moins 90 %, de tous les $R^1$ étant $C_1$-$C_4$-alkyle,
EO signifiant $-CH_2-CH_2-O$,
Y étant identiques ou différents et sélectionnés parmi $SO_3^-$ et H, au moins 30 %, de préférence au moins 50 % de tous les Y étant $SO_3^-$,
x étant identiques ou différents et sélectionnés parmi 5 à 50, de préférence 10 à 40, et n étant sélectionné parmi 1, 2 et 3.

**2.** Éthoxylates d'oligopropylèneimine modifiés de manière amphotère (A) selon la revendication 1, n = 1, 2 ou 3, au moins 80 % des $R^1$ étant des $C_1$-$C_4$-alkyle et le rapport de $R^1 = C_1$-$C_4$-alkyle sur $Y = SO_3^-$ étant en moyenne de 1,0:1,0 à 1,0:0,8.

**3.** Éthoxylates d'oligopropylèneimine modifiés de manière amphotère (A) selon la revendication 1 ou 2, n = 2 ou 3 et au moins 90 % de tous les $R^1$ étant méthyle.

**4.** Éthoxylates d'oligopropylèneimine modifiés de manière amphotère (A) selon la revendication 1 ou 2, n = 2, au moins 90 % de tous les $R^1$ étant méthyle et x = 15-30.

**5.** Mélange de composés comprenant au moins un éthoxylate d'oligopropylèneimine modifié de manière amphotère (A) selon la revendication 1, 2, 3 ou 4, n = 2, et au moins un composé isomérique selon la formule (II)

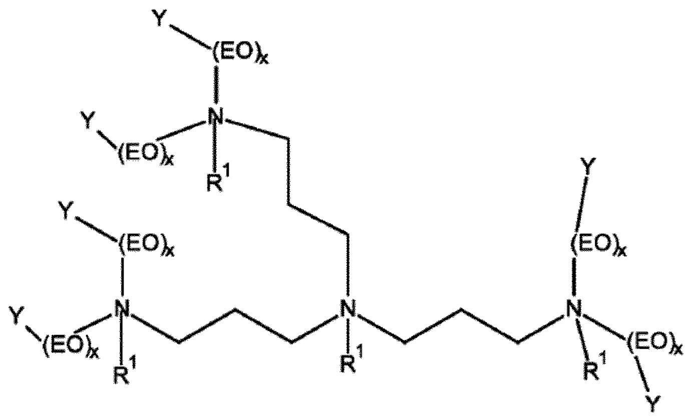

(II)

$R^1$ étant identiques ou différentes et sélectionnés parmi $C_1$-$C_4$-alkyle, H et une paire d'électrons libres, au moins 50 %, de préférence au moins 80 %, de préférence au moins 90 %, de tous les $R^1$ étant $C_1$-$C_4$-alkyle,
EO signifiant $-CH_2-CH_2-O$,
Y étant identiques ou différents et sélectionnés parmi $SO_3^-$ et H, au moins 30 %, de préférence au moins 50 % de tous les Y étant $SO_3^-$,
x étant identiques ou différents et sélectionnés parmi 5 à 50.

**6.** Mélange selon la revendication 5 comprenant un éthoxylate d'oligopropylèneimine modifié de manière amphotère (A) selon la formule (I) et des composés selon la formule (II) en un rapport molaire total dans la plage allant de 10:1 ou plus.

**7.** Mélange comprenant un composé selon l'une quelconque des revendications 1 à 4 ou mélange de composés selon la revendication 5 ou 6, ledit mélange comprenant de plus le sulfate d'un métal alcalin et/ou d'une amine.

**8.** Mélange selon la revendication 7, ledit mélange comprenant de plus le sel de sulfate d'une alcanolamine.

**9.** Procédé de préparation d'éthoxylates d'oligopropylèneimine modifiés de manière amphotère (A) selon la revendication 1, 2, 3 ou 4, ledit procédé comprenant les étapes de

(a) fourniture d'une amine sélectionnée parmi l'ammoniac, la 1,3-propylènediamine, la bis-(3,3'-aminopropyl)amine et la bis-(3,3'-aminopropyl)-1,3-propylènediamine, ou des mélanges correspondants
(b) éventuellement, cyanoéthylation de ladite amine avec de l'acrylonitrile en un rapport de 100:1 à 1:2,5, suivie

d'une hydrogénation, pour obtenir des oligopropylèneimines comportant 2, 3 et 4 motifs répétitifs
(c) éventuellement purification des oligopropylèneimines de l'étape (b)
(d) éthoxylation de ladite amine et/ou oligopropylèneimine de l'étape a, b ou c, et
(e) quaternization au moins partielle et transsulfatation avec un sulfate de di-$C_1$-$C_4$-alkyle.

**10.** Procédé selon la revendication 9, l'étape de purification (c) étant réalisée pour obtenir des oligopropylèneimines comportant 2, 3 et 4 motifs répétitifs, ou des mélanges correspondants, avec une pureté d'au moins 80 % en poids.

**11.** Procédé selon la revendication 9 ou 10, la quaternization au moins partielle à l'étape (e) étant réalisée avec du sulfate de diméthyle.

**12.** Procédé selon les revendications 9, 10 ou 11, la transsulfatation à l'étape (e) étant réalisée avec de l'acide sulfurique comme catalyseur.

**13.** Procédé selon l'une quelconque des revendications 9, 10, 11 ou 12, la transsulfatation à l'étape (e) étant réalisée quantitativement (>= 80 %) et un polymère légèrement cationique ou net neutre étant obtenu.

**14.** Procédé selon l'une quelconque des revendications 9 à 13, ledit procédé comprenant l'étape subséquente de neutralisation de l'acide sulfurique avec une base sélectionnée dans le groupe des hydroxydes de métaux alcalins et des amines.

**15.** Procédé selon la revendication 14, la base pour la neutralisation de l'acide sulfurique étant sélectionnée dans le groupe des alcanoamines.

**16.** Procédé selon l'une quelconque des revendications 9 à 15, l'éthoxylation à l'étape (d) étant réalisée en deux sous-étapes :

(i) conversion avec jusqu'à une mole d'oxyde d'éthylène par fonction N-H suivie de
(ii) conversion avec plus d'oxyde d'éthylène sous catalyse alcaline.

**17.** Éthoxylates d'oligopropylèneimine modifiés de manière amphotère (A) selon la revendication 1, 2, 3 ou 4, pouvant être obtenus par un procédé selon l'une quelconque des revendications 9 à 16.

**18.** Utilisation d'éthoxylates d'oligopropylèneimine modifiés de manière amphotère (A) selon la revendication 1, 2, 3 ou 4 ou de mélanges selon l'une quelconque des revendications 5 à 8 dans des applications de blanchisserie.

**19.** Formulation de blanchisserie, comprenant au moins un des éthoxylates d'oligopropylèneimine modifiés de manière amphotère (A) selon l'une quelconque des revendications 1 à 4 et/ou un mélange selon l'une quelconque des revendications 5 à 8.

**20.** Formulation de blanchisserie selon la revendication 19, comprenant en outre du 2-phénoxyéthanol et/ou du 4,4'-dichloro-2-hydroxydiphényléther.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3301154 A
- EP 3167034 A
- EP 112593 A
- WO 2020030469 A
- EP 2961819 A
- US 20180216037 A
- US 20190024026 A
- WO 2006108856 A2
- WO 2006108857 A1
- EP 2209837 B1
- EP 2291501 B1
- EP 2961819 B1
- EP 2961821 B1
- EP 2961822 B1
- DE 2540871 A1
- DE 2605212 A1
- WO 2014131649 A1
- EP 636409 A
- WO 2017009220 A
- US 9000217 B2
- EP 2638020 B1
- EP 0851023 A
- DE 19819187 A
- US 3915903 A
- EP 3039057 B1

### Non-patent literature cited in the description

- *CHEMICAL ABSTRACTS,* 122-99-6
- *CHEMICAL ABSTRACTS,* 3380-30-1